(19) Europäisches Patentamt
European Patent Office
Office européen des brevets

(11) EP 2 607 394 B1

(12) # EUROPÄISCHE PATENTSCHRIFT

(45) Veröffentlichungstag und Bekanntmachung des Hinweises auf die Patenterteilung:
**03.06.2015 Patentblatt 2015/23**

(51) Int Cl.:
***C08F 293/00*** *(2006.01)* ***C09J 133/00*** *(2006.01)*

(21) Anmeldenummer: **12194258.5**

(22) Anmeldetag: **26.11.2012**

(54) **Haftklebemassen mit hohen Molmassen und enger Molmassenverteilung und Verfahren zu deren Herstellung**

Adhesive masses with high mole masses and a dense mole mass distribution and process for their preparation

Masses adhésives avec masse molaire élevée et répartition étroite de la masse molaire et procédé de fabrication

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2011 DE 102011089367**

(43) Veröffentlichungstag der Anmeldung:
**26.06.2013 Patentblatt 2013/26**

(73) Patentinhaber: **tesa AG**
**20253 Hamburg (DE)**

(72) Erfinder: **Prenzel, Dr. Alexander**
**20259 Hamburg (DE)**

(56) Entgegenhaltungen:
**EP-A2- 1 308 493**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 607 394 B1

## Beschreibung

Die Erfindung betrifft ein Verfahren zur Herstellung von Haftklebemassen, welche hohe Molmassen kombiniert mit einer engen Molmassenverteilung aufweisen, sowie entsprechend hergestellte Haftklebemassen besonders Polyacrylat-basierende Haftklebemassen.

Für hochwertige industrielle Anwendungen, insbesondere auch als Klebe-, Haftklebe- öder Heißsiegelmassen, werden unter anderem Polyacrylate eingesetzt, da diese sich für die wachsenden Anforderungen in diesen Anwendungsbereichen als gut geeignet herausgestellt haben.

So müssen Haftmassen eine gute Anfassklebrigkeit ("Tack") aufweisen, aber auch hohen Anforderungen im Bereich der Scherfestigkeit gerecht werden. Gleichzeitig muss auch eine gute Verarbeitbarkeit, insbesondere eine hohe Eignung zur Beschichtung dieser Massen auf Trägermaterialien, gegeben sein. Dies wird insbesondere durch Polyacrylate mit hohen Molmassen, hoher Polarität und anschließender effizienter Vernetzung erreicht. Zudem lassen sich Polyacrylate transparent und witterungsstabil herstellen.

Die Kohäsion von Polymeren und somit auch die Scherfestigkeit der daraus hergestellten Haftklebemassen werden primär durch die Molmasse bestimmt und können durch Erzeugung eines physikalischen oder chemischen Netzwerkes noch weiter gesteigert werden. Damit das Polymer während der Herstellung eines Haftklebebandes aber weiterhin aus Lösung oder aus der Schmelze beschichtbar bleibt, muss es zunächst im unvernetzten Zustand beschichtet werden, und die Vernetzung erfolgt erst in einem anschließenden Schritt. Der Einsatz von chemischen Vernetzern kann wiederum während der Verarbeitung zu Topfzeitproblemen führen, oder die Vernetzung gerade bei niedrigen Temperaturen ist teilweise sehr langsam, weshalb es von Vorteil ist, von vornherein Polymere mit hohen Molmassen einzusetzen, um den Einsatz der benötigten Vernetzermengen auf ein Minimum zu reduzieren.

Die Breite der Molmassenverteilung hat ebenfalls einen Einfluss auf die Verarbeitung bzw. Eigenschaften der Polymere. So verschafft eine enge Molmassenverteilung unter anderem den Vorteil eines engeren thermischen Erweichungsbereiches infolge höherer Gleichmäßigkeit der Ketten, was gerade im Falle der Schmelzeverarbeitung gewünscht sein kann. Weiterhin ist bei einer gegebenen Molmasse durch eine enge Verteilung der Anteil der niedermolekularen Ketten begrenzt, wodurch erneut die Kohäsion sowie die Zugfestigkeit gesteigert werden kann.

Es ist daher gewünscht, insbesondere für schmelzeverarbeitbare Haftklebemassen Polymere zu erzeugen, die einerseits hohe mittlere Molmassen aufweisen, andererseits aber eine enge Molmassenverteilung (Polydispersion) besitzen.

Üblicherweise werden Polyacrylathaftklebemassen mittels radikalischer Polymerisation hergestellt. Hohe Molmassen können auf verschiedenste Weisen erzielt werden, wobei niedrige Reaktionstemperaturen, hohe Monomer- und geringe Initiatorkonzentrationen am häufigsten genannt werden, wie beispielsweise in der US 5,100,980 A beschrieben. Da bei stark exothermen Reaktionen hohe Monomerkonzentrationen schwierig zu handhaben sind und die Reaktionstemperatur nur durch starkes Kühlen abgesenkt werden kann, ist die Polymerisation mit geringen Initiatorkonzentrationen die am einfachsten umsetzbare Methode, um Polymere mit hohen Molmassen herzustellen.

Typischerweise wird die radikalische Polymerisation von Vinylmonomeren durch Peroxid- oder Azoinitiatoren eingeleitet, wie durch D.B. Priddy et al. in Adv Polym. Sci. 1994, 111, 67 beschrieben. Generell ist für Peroxide bekannt, dass für den sicheren Umgang diese aufgrund des von ihnen ausgehenden Gefährdungspotenzials mit inerten Verbindungen wie Phlegmatisierern verdünnt werden, wie in der US 5,347,055 beschrieben. Diese Phlegmatisierer können teils die radikalische Polymerisation beeinflussen und stellen wiederum Verunreinigungen im fertigen Polymerprodukt dar. Azo-Initiatoren hingegen sind nicht sehr effizient und führen aufgrund der gegenüber Peroxiden erhöhten Pfropfwirkung zu einer Verbreiterung der Molmassenverteilung.

Diradikalische Initiatoren wurden bereits von Borsig et al. in Collect Czech. Chem. Commun. 1973, 38, 1343 für radikalische Polymerisationen verwendet werden, um Polymere mit hoher Molmasse herzustellen. Am Beispiel der Polymerisation von Methylmethacrylat konnte gezeigt werden, dass bei gleichem Monomerumsatz mit den Diradikalen im Vergleich zu einem Monoradikal deutlich höhere Molmassen erzielt werden können. Allerdings wird weiterhin beschrieben, dass die Verwendung von Diradikal-Initiatoren zu einer Absenkung der Polymerisationsgeschwindigkeit führt.

Crivello *et al.* beschreiben in der US 4,675,426 eine weitere radikalische Polymerisation unter Verwendung von cyklischen Pinakolethern als Diradikal-Initiatoren. Allerdings weisen auch die Polymerisationen mit diesen Initiatoren niedrigere Reaktionsgeschwindigkeiten auf.

Diradikal-Initiatoren können auch aus Donor-Akzeptor-substituierten Cyclopropenderivaten gebildet werden, wie in Polym. Bull. 1991, 25, 537 und Macromolecules 1991 24, 2485 von Hall *et al.* gezeigt. Allerdings weist das mit diesem Initiator synthetisierte Polystyrol eine bimodale Molekularmassenverteilung mit einer niedrigen Molmassenfraktionen auf, was auf eine Selbstterminierung durch das Diradikal zurückzuführen ist.

Peroxide wurden ebenfalls als Diradikal- oder multifunktionelle Initiatoren eingesetzt. Allerdings hat sich gezeigt, dass die Effizienz mit zunehmender Anzahl an Peroxidfunktionalitäten in multifunktionalen Peroxid-Initiatoren sinkt, wie in D.B. Priddy, Adv. Pol. Sci. 1994, 111, 67, "Recent Advances in Styrene Polymerisation" gezeigt.

Die US 5,618,900 beschreibt die Verwendung von Endiin-, Eninallen-, Endiallen-, Eninkumulen-, cyklische Diin-

und weiterer Systeme, die alle unter Einwirkung von thermischer Energie Diradikale mittels Bergman-Cyklisierung bilden. Letztere sind wiederum geeignet, als Initiatoren für radikalische Polymerisationen zu fungieren, was anhand der Substanzpolymerisation von n-Butylacrylat mit guten Reaktionsgeschwindigkeiten gezeigt wird. Jedoch hat dieses Verfahren den Nachteil, dass nur ein geringer Umsatz erzielt wird und dass es auch hier durch Selbstterminierungsreaktionen und normalen Abbruchreaktionen Polymere mit relativ breiten Molmassenverteilungen erzeugt werden. Solche Selbstterminierungen können insbesondere bei noch relativ kurzen Ketten, also geringem Umsatz, durch Rekombination der beiden Radikalenden einer beidseitig wachsenden Kette geschehen.

Enge Molmassenverteilungen hingegen können durch kontrollierte radikalische Polymerisationen, wie beispielsweise mittels Atom Transfer Radical Polymerization (ATRP, US 5,945,491 A, US 5,854,364 A und US 5,789,487 A) und RAFT-Verfahren (Radical Addition Fragmentation Termination, US 6,765,078 B2 und US 6,720,399 B2), erreicht werden, jedoch führt die präzise Kontrolle der Molmassenverteilung meist zu einer Limitierung hinsichtlich der erreichbaren Molmassen. Werden die für scherfeste Haftklebemassen benötigten hohen Molmassen angestrebt, dürfen nur sehr geringe Mengen der Reglersubstanzen (z.B. Raft-Reagenzien) verwendet werden, was wiederum ein unkontrolliertes Kettenwachstum zur Folge hat (Macromol. Theory Simul. 2002, 11, 823). Rzayev *et al.* konnten zeigen, dass eine RAFT-kontrollierte Hochdruckpolymerisation bei ausgewählten Monomeren zu engen Molmassenverteilungen und hohen Molmassen führt, jedoch ist dieses Verfahren nicht generell einsetzbar und nur unter hohem verfahrenstechnischen Aufwand umsetzbar (Angew. Chem., Int. Ed. 2004, 43, 1691).

Erste Versuche, kontrollierte radikalische Polymerisationen mit Diradikalen durchzuführen, führten bisher entweder zwar zu hohen Umsätze, jedoch auch zu hohen Polydispersitäten (Molmassenverteilungen) der Polymere, oder zu geringen Umsätzen mit geringen Polydispersitäten (J. Am. Chem. Soc. 2003, 125, 12992).

Entsprechende, durch Diradikal-initiierte Polymerisation erhältliche Polymere sind daher erwartungsgemäß für den Einsatz als Haftklebemasse nicht geeignet. Eine Kombination aus hohen Umsätzen und geringen Polydispersitäten kombiniert mit einer hohen Molmasse des Polymers wurde bisher nicht beschrieben.

Aufgabe der Erfindung ist es, ein Polymerisationsverfahren zur Herstellung von Polymeren, insbesondere Polyacrylaten, mit hohen Molmassen und einer engen Molmassenverteilung und somit den Zugang zu scherfesten Klebemassen, insbesondere Haftklebemassen, zu ermöglichen. Das Polymerisationsverfahren soll nach Möglichkeit in normale industrielle Polymerisationsprozesse implementierbar sein, hohe Monomerumsätze aufweisen sowie keinem zusätzlichen verfahrenstechnischen Aufwand bedürfen. Weiterhin soll die Reaktionsgeschwindigkeit mit herkömmlichen radikalischen Polymerisationen vergleichbar sein bei gleichzeitig hohem Umsatz der Reaktion, da die Raum-Zeit-Ausbeute und die Effizienz ebenfalls ein bedeutender wirtschaftlicher Faktor sind.

Aus den oben beschriebenen Gründen ließ sich nicht vermuten, dass die Kombination von Diradikal-initiierten Polymerisationen mit der Verwendung von Reglersubstanzen kombinierbar und bei guten Polymerisationsgeschwindigkeiten zu den gewünschten Polymereigenschaften führen könnte.

Erfindungsgemäß wurde gefunden, dass als Haftkiebemassen verwendbare Polymere mit hohen Molmassen und einer engen Molmassenverteilung hervorragend mittels einer Polymerisation erhalten werden können, wenn eine Initiierung mit Diradikal-Initiatoren durchgeführt wird und die Polymerisation mit Reglersubstanzen, vorteilhaft mit RAFT-Reglern, geregelt wird. Besonders hervorragend ist dieses Verfahren geeignet zur Herstellung von Polyacrylaten. Die erfindungsgemäß erhältlichen Polymere, insbesondere Polyacrylate, sind besonders vorteilhaft zur Verwendung als scherfeste Haftklebemassen geeignet.

Die Erfindung betrifft dementsprechend ein Verfahren zur Polymerisation eines oder mehrerer mittels radikalischer Polymerisation umsetzbarer Monomere, insbesondere von (Meth)acrylsäure und/oder (Meth)acrylsäureestern, umfassend die Kontaktierung der Monomere mit einem Diradikal-Initiator in Anwesenheit einer Reglersubstanz - im Rahmen dieser Schrift auch als "Polymerisationsregler" bezeichnet -, bei Energiezufuhr, die ausreichend ist, um die radikalische Polymerisation zu initiieren. Zur Initiierung werden als Initiatoren solche Moleküle mit C-C-Mehrfachbindungen eingesetzt, die unter den gewählten thermischen Bedingungen der radikalischen Polymerisation und/oder Bestrahlung mittels energiereichen Strahlen, wie beispielweise UV-Strahlen, unter Ausbildung eines Diradikals cyklisieren ("diradikalbildende Initiatoren"). In der Regel, aber nicht zwingend, werden die betreffenden Mehrfachbindungen durch die Anwesenheit weiterer funktioneller, die Cyclisierung aktivierende Bausteine im Initiatormolekül, wie zumindest einer weiteren Mehrfachbindung und/oder Heteroatomen und/oder dergleichen, aktiviert.

Erfindungsgemäß wird das Verhältnis V der Stoffmenge $n_1$ der diradikalbildenden Verbindung (bzw. der diradikalbildenden Verbindungen, wenn mehrere diradikalbildende Verbindungen eingesetzt werden) zur Stoffmenge $n_R$ des Polymerisationsreglers (bzw. der Polymerisationsregler, wenn mehrere Polymerisationsregler eingesetzt werden) derart gewählt, dass es im Bereich von $2 \leq V \leq 64$ liegt.

Sehr vorteilhaft ist ein erfindungsgemäßes Verfahren zur Herstellung von Haftklebemassen, bei dem eine kontrollierte radikalische Polymerisationsreaktion einer Reaktionsvorlage umfassend ein oder mehrere Monomere, insbesondere zumindest ein Monomer auf Acrylatbasis, in Anwesenheit zumindest eines radikalischen Initiators sowie in Anwesenheit zumindest einer Reglersubstanz zur Herstellung von Polymeren, insbesondere von Polymeren auf Acrylatbasis, durchgeführt wird. Bei dem erfindungsgemäßen Verfahren wird die Polymerisation durch zumindest ein cyclisches

1,4-Diradikal (zur Bezeichnung als 1,4-Diradikal siehe weiter unten) gestartet, wobei das cyclische 1,4-Diradikal - insbesondere durch Zufuhr thermischer Energie - mittels einer Cyclisierungsreaktion aus einer Verbindung erzeugt wird, die zumindest zwei C-C-Mehrfachbindungen aufweist.

Als Reglersubstanz wird insbesondere vorteilhaft zumindest eine Verbindung mit zumindest einer funktionellen Gruppe S-C=X eingesetzt, wobei X = S, O oder N, wobei besonders bevorzugt die Reglersubstanz aus der Gruppe umfassend Dithioester, Dithiocarbonate, Dithiocarbamate, Trithiocarbonate, Imido-Dithio-Carbonate und Xanthate gewählt ist. Reglersubstanzen mit zumindest einer funktionellen Gruppe S-C=X werden im Rahmen dieser Schrift auch als "RAFT-Regler" bezeichnet.

Als C-C-Mehrfachbindungen werden im Rahmen dieser Schrift solche Bindungen bezeichnet, die zumindest eine $\pi$-Bindung beinhalten, insbesondere Doppelbindungen und/oder Dreifachbindungen. Die Doppel- und Dreifachbindungen können dabei isoliert (also nächst und übernächst benachbart zu Einfachbindungen) oder zu anderen (weiteren) Doppel- oder Dreifachbindungen konjugiert vorliegen, Doppelbindungen können zu anderen (weiteren) Doppelbindungen auch kumuliert vorliegen.

Die Verbindungen, aus denen durch Cyclisierung 1,4-Diradikale erzeugt werden und somit die Vorstufe zu den eigentlichen Polymerisationsstartern darstellen, werden im Rahmen dieser Schrift auch als "diradikalbildende Initiatoren" bezeichnet.

Mit dem Begriff "Reaktionsvorlage" werden im Rahmen dieser Schrift die zur Polymerisation vorgelegten Ausgangsstoffe bezeichnet, dies können je nach Sachlage ein Monomer (zur Herstellung von Homopolymeren) oder eine Monomermischung (zur Herstellung von Copolymeren) sein. Weiterhin können zur Polymerisation gegebenenfalls weitere Zusatzstoffe (wie Initiatoren, Regler und dergleichen), bei einer Lösemittelpolymerisation oder einer Dispersionspolymerisation zusätzlich das bzw. die Lösemittel bzw. das oder die Dispersionsmittel zugegen sein.

Wenn im Rahmen dieser Schrift von "einer chemischen Verbindung" oder "einer chemischen Substanz" - wie zum Beispiel auch einem Monomer, einem Regler, einer Reglersubstanz, einem Initiator oder dergleichen - die Rede ist, so ist damit nicht das einzelne Molekül, sondern die Art dieser chemischen Verbindung bzw. Substanz gemeint, also die jeweilige Gruppe identischer Moleküle. Sofern das einzelne Molekül gemeint ist, wird von dem Molekül der entsprechenden chemischen Substanz gesprochen (also zum Beispiel von einem Monomer-Molekül, einem Regler-Molekül, einem Reglersubstanz-Molekül beziehungsweise einem Intiiator-Molekül). Dementsprechend bedeutet der Ausdruck "mehrere chemische Verbindungen" (beispielweise auch mehrere Monomere, mehrere Regler und so weiter) mehrere Gruppen jeweils identischer Moleküle (beispielweise bedeutet "mehrere Monomere" mehrere Gruppen jeweils identischer Monomer-Moleküle in der jeweiligen Gruppe, wobei sich die Monomer-Moleküle zwischen den jeweiligen Gruppen unterscheiden; "mehrere Regler" mehrere Gruppen jeweils identischer Regler-Moleküle in der jeweiligen Gruppe, wobei sich die Regler-Moleküle zwischen den jeweiligen Gruppen unterscheiden; usw.).

Das radikalische Polymerisationsverfahren der vorliegenden Erfindung verwendet einen diradikalbildenden Initiator, der für den sicheren Umgang nicht verdünnt zu werden braucht und der freie und kontrollierte radikalische Polymerisationen mit hoher Effizienz und hoher Polymerisationsgeschwindigkeit initiiert. Des Weiteren ist der diradikalbildende Initiator für Lösungsmittel- und Substanzpolymerisationen geeignet.

Die für das in der vorliegenden Erfindung beschriebene Verfahren geeigneten diradikalbildenden Initiatoren enthalten zumindest zwei C-C-Mehrfachbindungen, so dass es bei Aktivierung - insbesondere durch thermische Energie, bevorzugt durch entsprechende Wärmezufuhr - unter Ausbildung eines Diradikals zu einer Cyklisierung mittels der zwei Mehrfachbindungen kommt. Dabei werden beispielweise wie folgt dargestellte Mechanismen (Mechanismen M1 und M2) unter Beteiligung der Mehrfachbindungen angenommen, ohne sich im Rahmen dieser Schrift auf die Richtigkeit dieses Mechanismus festlegen zu wollen:

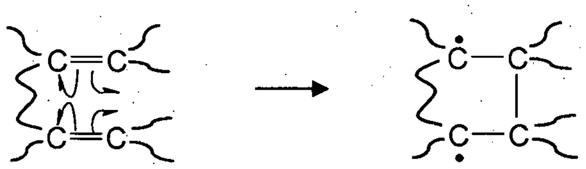

M1

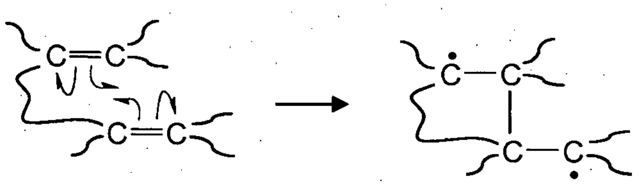

M2

Wie vorstehend dargestellt kann der Ringschluss - je nach Reaktionsbedingungen und Art der Substituenten - derart verlaufen, dass beide radikalische Elektronen tragenden C-Atome Teil des Ringes sind (Mechanismus M1), dass nur eines der radikaltragenden Elektronen Teil des Rings ist und das andere radikaltragende C-Atom dem Ring benachbart ist (Mechanismus M2), oder auch dass beide radikaltragenden C-Atome dem Ring benachbart sind (nicht gesondert dargestellt). Mindestens die neu gebildete C-C-Bindung ist jedoch Bestandteil des entstehenden Rings.
In den vorstehenden Mechanismen sind die Mehrfachbindungen als Doppelbindungen dargestellt, ohne sich durch diese Darstellung beschränken zu wollen. Der Mechanismus bezüglich Dreifachbindungen verläuft analog, wobei dann im Produkt an Stelle der vorherigen Dreifachbindung eine Doppelbindung verbleibt. Insbesondere können so Verbindungen mit konjugierten oder aromatischen Elektronsystemen erhalten werden. Die Bezeichnung als 1,4-Diradikal soll keine Aussage über die absoluten Positionen der radikaltragenden C-Atome im Molekül treffen, sondern die Position der Radikale relativ zueinander (das zweite radikalische Elektron befindet sich am vierten C-Atom einer Reihe, als dessen erstes C-Atom dasjenige bezeichnet wird, an dem sich das erste radikalische Elektron befindet), siehe beispielweise nachfolgend:

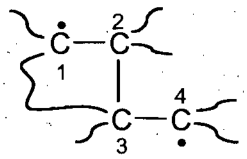

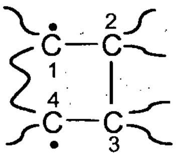

Im Falle von Endiinen als diradikalbildende Verbindung ist der vorstehende Mechanismus auch als Bergman-Cyclisierung oder Bergman-Reaktion bekannt, ähnlich verlaufen auch die so genannte Myers-Reaktion und die so genannte Moore-Reaktion, siehe die entsprechende einschlägige Literatur.

Beispiele für zum Ringschluss geeignete diradikalbildende Initiatoren sind Endiin-, Eninallen-, Endiallen-, Eninkumulen-, Enallenkumulen-, cyklische Diin- und andere ungesättigte Verbindungen, wobei diese Aufzählung beispielhaft und nicht beschränkend zu verstehen ist. Endiin-Verbindungen enthalten mindestens eine C-C-Doppelbindung und mindestens zwei C-C-Dreifachbindungen. Eninallen-Verbindungen enthalten mindestens eine C-C-Doppelbindung, mindestens eine C-C-Dreifachbindung und mindestens eine Allen-Gruppe (also zwei direkt benachbarte C-C-Doppelbindungen). Endiallen-Verbindungen enthalten mindestens eine C-C-Doppelbindung und mindestens zwei Allen-Gruppen. Eninkumulen-Verbindungen enthalten mindestens eine C-C-Doppelbindung, mindestens eine C-C-Dreifachbindung und mindestens eine Kumulen-Kette, die als eine Kette von mindestens drei benachbarten Doppelbindungen definiert ist (Römpp Online, Georg Thieme Verlag, Dokumentenkennung RD-11-02373, letzte Aktualisierung Dezember 2009). Enallenkumulen-Verbindungen enthalten mindestens eine C-C-Doppelbindung, mindestens eine Allen-Gruppe und mindestens eine Kumulen-Kette. Cyklische Diin-Verbindungen enthalten mindestens zwei C-C-Dreifachbindungen in einer Ringstruktur. Diese Verbindungen können auch andere ungesättigten Gruppen, elektronenziehende Gruppen, Alkylgruppen, weitere funktionelle Gruppen oder Ringstrukturen aufweisen, sofern die ungesättigten Bindungen so im Molekül positioniert sind, dass beim Erhitzen auf eine ausreichende Temperatur eine Cyklisierung unter Bildung eines Diradikals erfolgt. Typische diradikalbildende Initiatoren sind durch die folgenden Formeln veranschaulicht:

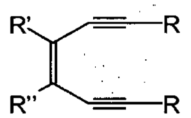

Endiin (EDY)
(I)

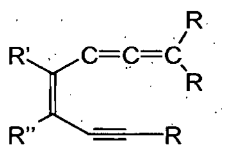

Eninallen (EAY)
(II)

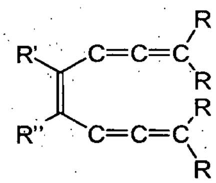

Endiallen (EDA)
(III)

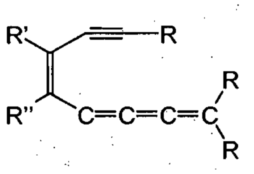

Eninkumulen (EYC)
(IV)

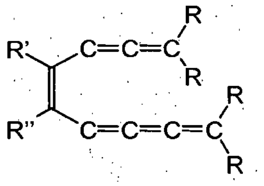

Enallenkumulen (EAC)
(V)

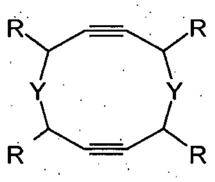

Cyklisches Diin (CDY)
(VI)

worin die Reste R (einschließlich R', R") unabhängig voneinander gewählt sind, insbesondere aus der Liste umfassend H-, Alkyl-, Alkoxy-, Thioalkyl-, Sulfoalkoxy-, Carboalkoxy-, Carboamidalkyl- und andere Substituenten, die die Cyklisierung und Bildung eines Diradikal nicht stören; Y gewählt ist aus der Liste umfassend O, S, strukturelle Gruppen, die über ein S, oder N in den Ring integriert sind, Alkylamin, schwefelhaltige Gruppen und phosphorhaltige Gruppen. Optional können zwei oder mehr der Reste R so kombiniert werden, dass das jeweilige Molekül einen oder mehrere Arylen- und/oder Alkylen-Ringe enthält; insbesondere vorteilhaft können in den Verbindungen I bis V solche Ringe über die beiden jeweils auf der linken Seite eingezeichneten Reste R', R" gebildet werden. Vorteilhaft werden die Reste R (einschließlich R', R") gewählt als Alkylgruppe bzw. Alkylkette mit ein bis sechs Kohlenstoffatomen.

Die Synthese solcher Verbindungen, die durch thermische Energie unter Ausbildung eines Diradikals cyklisieren, ist beispielweise in der US 5,618,900 A beschrieben.

Konkrete Beispiele geeigneter diradikalbildender Verbindungen für das in der vorliegenden Erfindung beschriebene Verfahren umfassen folgende Strukturen, sind aber nicht darauf begrenzt:

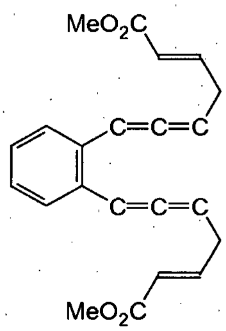

(1)

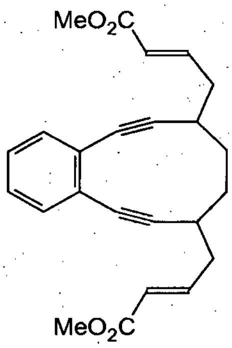

(2)

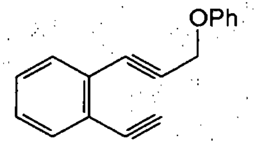

(3)

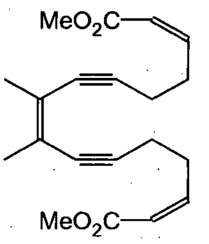

(4)

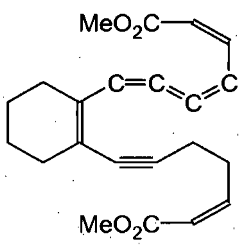

(5)

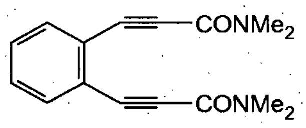

(6)

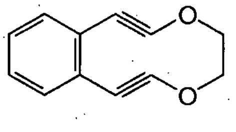

(7)

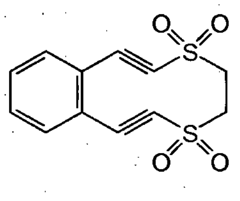

(8)

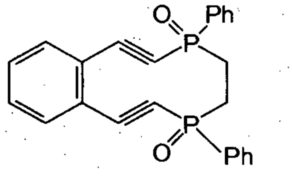

(9)

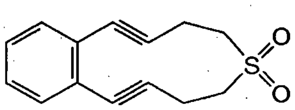 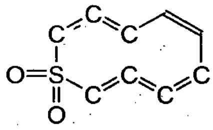 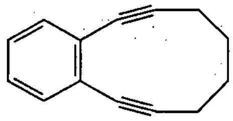

(10) (11) (12)

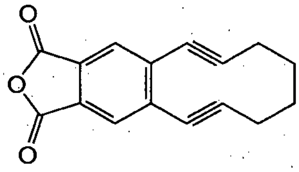 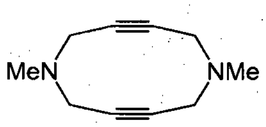 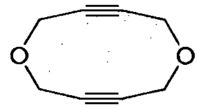

(13) (14) (15)

Durch das Kettenwachstum an den beiden Radikalen der Initiator-Moleküle entstehen Makromoleküle, deren Polymerrückgrat (also deren Hauptkette) ein cyclisches Strukturelement enthält (so dass also zumindest eine Bindung des cyclischen Strukturelementes Teil des Polymerrückgrats ist). Je nach eingesetztem diradikalbildendem Initiator ist das cyclische Strukturelement insbesondere ein Element ist aus der Gruppe umfassend Fünfringe, insbesondere heterosubstituierte Fünfringe, aromatische Sechsringe, kondensierte aromatische Systeme, heterosubstituierte Bicyclo-[4.4.0]-Decdiene mit einem konjugierten $\pi$-System, das sich über die Brückenbindung erstreckt, insbesondere 4,9-heterosubstituiertes Bicyclo-[4.4.0]-Dec-1,6-diene.

Bei dem erfindungsgemäßen Verfahren wird insbesondere vorteilhaft zumindest eine Reglersubstanz mit einer funktionellen Gruppe S-C=X eingesetzt, wobei X = S, O oder N ist. Bevorzugt wird die Reglersubstanz gewählt aus der Gruppe umfassend Dithioester, also Verbindungen der allgemeinen Struktur

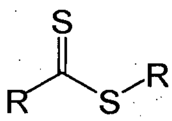 ,

Dithiocarbonate, und zwar sowohl S,S'-substituierte Dithiocarbonate, also Verbindungen der allgemeinen Struktur

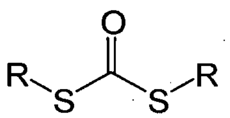 ,

als auch Xanthate (O,S-substituierte Dithiocarbonate), also Verbindungen der allgemeinen Struktur

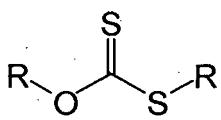 ,

Dithiocarbamate, also Verbindungen der allgemeinen Struktur

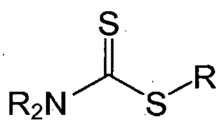 ,

Trithiocarbonate, also Verbindungen der allgemeinen Struktur

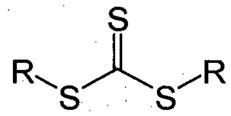

und Imido-Dithio-Carbonate, also Verbindungen der allgemeinen Struktur

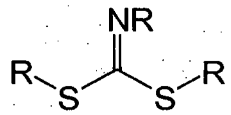

Dabei stellt vorstehend R allgemein und unabhängig voneinander gewählt organische Reste oder ggf. auch anorganische Reste dar (die Mitglieder der genannten Gruppe an Regler-Substanzen werden im Rahmen dieser Schrift auch als "RAFT-Regler" oder als Polymerisationsregler bezeichnet).
Dabei wird die Mehrzahl der Reglersubstanz-Moleküle, insbesondere werden nahezu alle Reglersubstanz-Moleküle, derart in die entstehenden Polymerketten eingebaut, dass die jeweilige Polymerkette zumindest eine funktionelle Gruppe eines in ihr eingebauten Reglers aufweist. Derart geregelte Polymere werden die Strukturelemente des entsprechenden RAFT-Reglers als Bausteine in den Polymerketten aufweisen, nämlich insbesondere die Gruppe S-C=X mit X = S, O oder N.

In einer vorteilhaften Entwicklung des Verfahrens wird die Polymerisation - insbesondere mit Initiierung durch zumindest einen radikalischen Initiator - mit zumindest einem Dithioester bzw. einem Trithiocarbonat als Polymerisationsregler durchgeführt. In einer bevorzugten Variante des erfinderischen Verfahrens werden als RAFT-Regler Verbindungen der folgenden allgemeinen Strukturformel

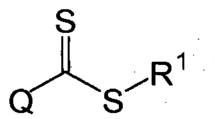 (III)

eingesetzt, wobei Q und $R^1$ unabhängig voneinander gewählt sind und Q bevorzugt ein Rest aus einer der Gruppen a) bis n) und $R^1$ bevorzugt ein Rest aus einer der Gruppen a), c) bis f) oder h) ist:

a) verzweigte und unverzweigte $C_1$- bis $C_{18}$-Alkyl-, verzweigte und unverzweigte $C_3$-bis $C_{18}$-Alkenyl-, verzweigte und unverzweigte $C_3$- bis $C_{18}$-Alkinylreste
b) Ethenyl- und Ethinylreste
c) nicht kondensierte und kondensierte Arylreste, besonders $C_6$- bis $C_{18}$-Arylreste, insbesondere unsubstituierte oder substituierte Phenylreste, unsubstituierte oder substituierte Benzylreste
d) aliphatische heterocyclische Reste, insbesondere $C_3$- bis $C_{12}$-Cycloalkylreste
e) aromatische heterocyclische Reste
f) substituierte Reste der Gruppe a), insbesondere

f1) jeweils durch zumindest eine OH-Gruppe, ein Halogenatom oder einen Silylether substituierte Reste der Gruppe a),
f2) jeweils durch zumindest eine Ester-, Amin-, Carbonat-, Cyano-, Isocyano- und/oder Epoxidgruppe und/oder mit Schwefel substituierte Reste der Gruppe a),

g) substituierte Reste der Gruppe a), insbesondere

g1) jeweils durch zumindest eine OH-Gruppe, ein Halogenatom oder einen Silylether substituierte Reste der Gruppe b),
g2) jeweils durch zumindest eine Ester-, Amin-, Carbonat-, Cyano-, Isocyano- und/oder Epoxidgruppe und/oder mit Schwefel substituierte Reste der Gruppe b),

h) -NH2, -NHR’, -NR’R", -NH-C(O)-$R^I$, -N$R^I$-C(O)-$R^{II}$, -NH-C(S)-R’, -N$R^I$-C(S)-$R^{II}$,

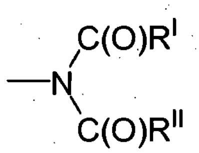 , 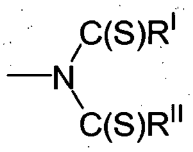 , 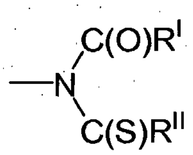

wobei $R^I$ und $R^{II}$ unabhängig voneinander gewählte Reste aus den Gruppe a) bis g) sind

i) -S-$R^I$, -S-C(S)-R', wobei $R^I$ ein Rest gewählt aus einer der Gruppen a) bis g) ist,

k) -O-$R^I$, -O-C(O)-$R^I$, wobei $R^I$ ein Rest gewählt aus einer der Gruppen a) bis g) ist,

l) Phosphatgruppenhaltige Reste, insbesondere -P(O)(O$R^{III}$)(O$R^{IV}$), wobei $R^{III}$ und $R^{IV}$ identisch oder unabhängig voneinander gewählte Reste aus den Gruppen a) bis g) sind,

m) $C_2$- bis $C_{18}$-Hetero-Alkylreste mit mindestens einem O-Atom und/oder mindestens einer N$R^I$-Gruppe in der Kohlenstoffkette, wobei $R^I$ ein Rest gewählt aus einer der Gruppen a) bis g) ist,

n) Wasserstoff.

Die genannten Substituenten-Auflistungen dienen nur als Beispiele für die jeweiligen Verbindungsgruppen und besitzen keinen Anspruch auf Vollständigkeit.

Weiterhin sind auch Verbindungen der folgenden Typen

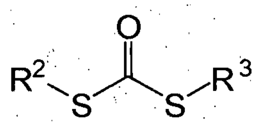 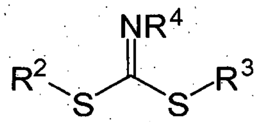

als Polymerisationsregler geeignet, wobei $R^2$, $R^3$ und $R^4$ unabhängig voneinander gewählt sind aus den Gruppen a) bis m).

Ein weiterer Aspekt der Erfindung betrifft die Verwendung der Polymere - insbesondere der Polyacrylate - als Klebemassen, insbesondere als Haftklebemassen, wobei die Kombination aus den mittels thermischer Cyklisierung sich bildenden Diradikalen als Initiatoren und den Reglern, insbesondere RAFT-Reglersubstanzen wie beispielsweise Dithioester oder Trithiocarbonaten, aufgrund der hohen Molmassen kombiniert mit einer engen Molmassenverteilung zu scherfesten Massen führt.

Das erfindungsgemäße Verfahren ermöglicht dementsprechend die Herstellung wohldefinierter Polymere, insbesondere Acrylat-Polymere, die hervorragend als Klebemassen, insbesondere als Haftklebemassen, eingesetzt oder zu diesen weiterverarbeitet werden können.

Unter dem Begriff "Haftklebemasse" (PSA; englisch: "pressure sensitive adhesives") werden wie üblich solche viskoelastischen, polymeren Massen verstanden, die - gegebenenfalls durch geeignete Additivierung mit weiteren Komponenten, wie beispielsweise Klebharzen - bei der Anwendungstemperatur (sofern nicht anders definiert, bei Raumtemperatur) dauerhaft klebrig und permanent klebfähig sind und an einer Vielzahl von Oberflächen bei Kontakt anhaften, insbesondere sofort anhaften (die einen sogenannten "Tack" [auch als Klebrigkeit oder Anfassklebrigkeit bezeichnet] aufweisen). Sie sind in der Lage, bereits bei der Anwendungstemperatur ohne eine Aktivierung durch Lösemittel oder durch Wärme - gegebenenfalls unter Einfluss eines mehr oder weniger hohen Druckes - ein zu verklebenden Substrat hinreichend zu benetzen, damit sich zwischen der Masse und dem Substrat für die Haftung hinreichende Wechselwirkungen ausbilden können.

Besonders hervorragend ist das Verfahren geeignet zur Herstellung von Polymeren auf Acrylatbasis, also solchen Polymeren, die zum Teil, insbesondere zum überwiegenden Teil (also zu mehr als 50 Gew.-%), auf Acrylsäure, Methacrylsäure, Acrylsäureestern und/oder Methacrylsäureestern als Monomeren (im folgenden gemeinschaftlich als "Acrylmonomere" bezeichnet) zurückzuführen sind (sofern im Rahmen dieser Schrift allgemein von "Acryl..." oder "Acrylat..." die Rede ist, sollen darin die entsprechenden methylsubstituierten Derivate, also die Methacrylverbindungen, mit enthalten sein, sofern dies im Einzelnen nicht anders dargestellt ist). Gleichsam umfasst der Ausdruck "(Meth)Acryl..." die entsprechenden Acrylverbindungen und die entsprechenden Methacrylverbindungen.

Die erfindungsgemäß erhältlichen Polyacrylate können beispielweise 100%-Acrylat-Systeme sein, also zu 100 % auf Acrylmonomeren zurückzuführen sind, oder solche Systeme, die als Comonomere neben den Acrylmonomeren weitere copolymerisierbare Monomere enthalten.

Besonders geeignet ist das Verfahren zur Herstellung von Acrylathaftklebemassen. Haftklebemassen bestehen üblicherweise aus einer Polymerkomponente, auch als Basispolymerkomponente bezeichnet, die ein Homopolymer, ein Copolymer oder eine Mischung aus Polymeren (Homopolymeren und/oder Copolymeren) sein kann. Die Zusammensetzung der Polymerkomponente kann je nach gewünschten Eigenschaften der Haftklebemasse gewählt werden. Üblicherweise werden der Basispolymerkomponente weitere Zusätze zum Teil in erheblichem Umfang zugesetzt, um

die gewünschten Eigenschaften des Endproduktes (der Haftklebemasse) zu erzielen. Häufig werden Haftklebemassen vernetzt, um eine hinreichende Kohäsion zu bewirken.

Zur Herstellung der Polyacrylate - insbesondere, aber nicht ausschließlich zur Verwendung als Haftklebemassen - wird erfindungsgemäß vorteilhaft von einer Reaktionsvorlage, insbesondere einer Monomermischung, ausgegangen, in welcher ethylenisch ungesättigten Verbindungen, insbesondere aus (Meth-)Acrylsäure und/oder deren Derivate, vorliegen, wobei diese unter Einsatz von Reglern, insbesondere RAFT-Reglern, radikalisch mittels diradikalischen Verbindungen als Initiatoren, insbesondere über einen RAFT-Prozess, polymerisiert wird.

Das Polyacrylat kann bzw. die Polyacrylate können die Basispolymerkomponente der Haftklebemasse darstellen, aber auch mit weiteren Polymeren (Acrylatpolymeren oder anderen Polymeren) zur Basispolymerkomponente abgemischt sein.

Die Basispolymerkomponente wird insbesondere vorteilhaft derart gewählt, dass der Gesamt-Gehalt an Acrylatmonomeren 40 bis 100 Gew,-%, besonders bevorzugt 50 bis 100 Gew.-% beträgt.

Erfindungsgemäß besonders geeignete Monomere, die insbesondere als Monomere bzw. Comonomere für das Polyacrylat verwendet werden können, sind z.B. Acrylsäure, Acrylsäure- und/oder Methacrylsäureester mit bis zu 30 C-Atomen, Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und einer oder zwei Doppelbindungen oder Mischungen dieser Monomeren.

Zur Polymerisation werden die Monomere dermaßen gewählt, dass die resultierenden Polymere als thermisch vernetzbare Haftklebemassen eingesetzt werden können, insbesondere derart, dass die resultierenden Polymere haftklebende Eigenschaften entsprechend dem "Handbook of Pressure Sensitive Adhesive Technology" von Donatas Satas (van Nostrand, New York 1989) besitzen. Die Monomere können auch derart gewählt werden, dass Heißschmelzkleber erzielt werden, also solche Klebstoffe, die erst durch Wärmeaktivierung in den Anwendungszustand gelangen.

Zur Herstellung von Polymeren zur Verwendung als Haftklebemassen werden die Comonomere so gewählt, dass die Glasübergangstemperatur $T_{G,A}$ der Polymere (als Glasübergangstemperaturen werden im Rahmen dieser Schrift die über Dynamische Differenzkalorimetrie (DSC) nach DIN 53765 bestimmbaren statischen Glasübergangstemperaturen verstanden; die Angaben zur Glasübergangstemperatur $T_G$ im Rahmen dieser Schrift beziehen sich auf den Glasumwandlungstemperatur-Wert Tg nach DIN 53765:1994-03, sofern im Einzelfall nichts anderes angegeben ist) unterhalb der Anwendungstemperatur, bevorzugt bei $T_{G,A}$ <= 15 °C liegt. Um dies zu erreichen, wird weiterhin die mengenmäßige Zusammensetzung der Monomermischung vorteilhaft derart gewählt, dass sich nach der Fox-Gleichung (G1) (vgl. T.G. Fox, Bull. Am. Phys. Soc. 1956, 1, 123) der gewünschte $T_{G,A}$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $W_n$ den Massenanteil des jeweiligen Monomers n (Gew.-%) und $T_{G,n}$ die jeweilige Glasübergangstemperatur des Homopolymers aus den jeweiligen Monomeren n in K.

Bevorzugt wird ein Polyacrylat eingesetzt, dass auf die folgende Monomerzusammensetzung zurückgeführt werden kann:

a) Acrylsäureester und/oder Methacrylsäureester derfolgenden Formel

$$CH_2 = C(R^a)(COOR^b)$$

wobei $R^a$ = H oder $CH_3$ und $R^b$ ein Alkylrest mit 4 bis 14 C-Atomen ist,

b) olefinisch ungesättigte Monomere mit funktionellen Gruppen, die geeignet sind, dass Polymer chemisch oder physikalisch zu vernetzen,

c) optional weitere Acrylate und/oder Methacrylate und/oder olefinisch ungesättigte Monomere, die mit der Komponente (a) copolymerisierbar sind.

Zur Anwendung des Polyacrylats als Haftkleber sind die Anteile der entsprechenden Komponenten (a), (b), und (c) derart gewählt, dass das Polymerisationsprodukt insbesondere eine Glastemperatur ≤ 15 °C (DMA bei geringen Frequenzen) aufweist.

Es ist zur Herstellung von Haftklebemassen sehr vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% zu wählen (die Angaben sind bezogen auf die Monomermischung für das "Basispolymer", also ohne Zusätze eventueller Additive zu dem fertigen Polymer, wie Harze etc.).

Für die Anwendung der Klebemasse als Heißschmelzkleber, also eines Materials, welches erst durch Erwärmen haftklebrig wird, werden die Anteile der entsprechenden Komponenten (a), (b), und (c) insbesondere derart gewählt, dass das Copolymer eine Glasübergangstemperatur ($T_G$) zwischen 15 °C und 100 °C aufweist, bevorzugt zwischen 30 °C und 80 °C, besonders bevorzugt zwischen 40 °C und 60 °C. Die Anteile der Komponenten (a), (b), und (c) sind entsprechend zu wählen.

Ein viskoelastisches Material, was beispielsweise typischerweise beidseitig mit haftklebrigen Schichten kaschiert sein kann, hat insbesondere eine Glasübergangstemperatur ($T_G$) zwischen - 50 °C bis +100 °C, bevorzugt zwischen -20 °C bis + 60 °C, besonders bevorzugt 0 °C bis 40 °C. Die Anteile der Komponenten (a), (b), und (c) sind auch hier entsprechend zu wählen.

Die Monomere der Komponente (a) sind insbesondere weichmachende und/oder unpolare Monomere.
Vorzugsweise werden für die Monomere (a) Acrylmonomere eingesetzt, die Acryl- und Methacrylsäureester mit Alkylgruppen aus 4 bis 14 C-Atomen, bevorzugt 4 bis 9 C-Atomen, umfassen. Beispiele für derartige Monomere sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat, und deren verzweigten Isomere, wie z. B. 2-Ethylhexylacrylat, 2-Ethylhexylmethacrylat.

Die Monomere der Komponente (b) sind insbesondere olefinische ungesättigter Monomere (b) mit funktionellen Gruppen, insbesondere mit funktionellen Gruppen, die eine Reaktion mit den Epoxidgruppen eingehen können.

Bevorzugt werden für die Komponente (b) Monomere mit solchen funktionellen Gruppen eingesetzt, die aus der folgenden Aufzählung ausgewählt sind: Hydroxy-, Carboxy-, Sulfonsäure-, oder Phosphonsäuregruppen, Säureanhydride, Epoxide, Amine.
Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itaconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Prinzipiell können im Sinne der Komponente (c) alle vinylisch-funktionalisierten Verbindungen eingesetzt werden, die mit der Komponente (a) und/oder der Komponente (b) copolymerisierbar sind, und können auch zur Einstellung der Eigenschaften der resultierenden Haftklebemasse dienen.

Beispielhaft genannte Monomere für die Komponente (c) sind:

Methylacrylat, Ethylacrylat, Propylacrylat, Methylmethacrylat, Ethylmethacrylat, Benzylacrylat, Benzylmethacrylat, sec-Butylacrylat, *tert*-Butylacrylat, Phenylacrylat, Phenylmethacrylat, Isobornylacrylat, Isobornylmethacrylat, *tert*-Butylphenylacrylat, *tert*-Butylaphenylmethacrylat, Dodecylmethacrylat, Isodecylacrylat, Laurylacrylat, n-Undecyl-acrylat, Stearylacrylat, Tridecylacrylat, Behenylacrylat, Cyclohexylmethacrylat, Cyclo-pentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyl-adamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethylacrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, *N*-(1-Methyl-undecyl)acrylamid, *N*-(n-Butoxymethyl)acrylamid, *N*-(Butoxymethyl)methacrylamid, *N*-(Ethoxymethyl)acrylamid, *N*-(n-Octadecyl)acrylamid, weiterhin *N,N*-Dialkyl-substituierte Amide, wie beispielsweise *N,N*-Dimethylacrylamid, *N,N*-Dimethylmethacrylamid, *N*-Benzylacrylamide, *N*-Isopropylacrylamid, *N-tert*-Butylacrylamid, *N-tert*-Octylacrylamid, *N*-Methylolacrylamid, *N*-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, *N*-Vinylphthalimid, *N*-Vinyllactam, *N*-Vinylpyrrolidon, Styrol, α- und *p*-Methylstyrol, α-Butylstyrol, 4-n-Butylstyrol, 4-n-Decylstyrol, 3,4-Dimethoxystyrol. Makromonomere wie 2-Polystyrolethylmethacrylat (Molmasse $M_w$ von 4000 bis 13000 g/mol), Poly(methylmethacrylat)ethylmethacrylat ($M_w$ von 2000 bis 8000 g/mol).

Monomere der Komponente (c) können vorteilhaft auch derart gewählt werden, dass sie funktionelle Gruppen

enthalten, die eine nachfolgende strahlenchemische Vernetzung (beispielsweise durch Elektronenstrahlen, UV) unterstützen. Geeignete copolymerisierbare Photoinitiatoren sind z.B. Benzoinacrylat und acrylatfunktionalisierte Benzophenonderivate. Monomere, die eine Vernetzung durch Elektronenbestrahlung unterstützen sind, z.B. Tetrahydrofufurylacrylat, *N-tert*-Butylacrylamid, Allylacrylat wobei diese Aufzählung nicht abschließend ist.

Ebenfalls erfindungsgemäße Monomere umfassen weitere radikalisch polymerisierbare Monomere wie Dienverbindungen, beispielsweise Butadien, Chloropren, Isopren und *p*-Divinylbenzol, und weitere ungesättigte Monomere wie beispielsweise Ethen, Tetrafluorethen sowie Trifluorchlorethen.

Darüber hinaus kann die Polymerisation auch in der Gegenwart eines vorgelösten Elastomers durchgeführt werden, sodass schlagzähmodifizierte und Gummi-gepfropfte Polymere hergestellt werden können.

Weiterhin optional kann im Anschluss an die Polymerisation das Polyacrylat auch mit anderen Polymeren geblendet bzw. abgemischt werden. Hierzu eignen sich Polymere auf Basis von Naturkautschuk, Synthesekautschuk, EVA, Siliconkautschuk, Acrylkautschuk, Polyvinylether. Die Herstellung der Polymerblends erfolgt entweder in Lösung oder erfolgt in einem Extruder, bevorzugt in einem Mehrwellenextruder oder in einem Planetwalzenmischer in der Schmelze.

## Herstellung der Polymerisate

Die Herstellung der Polyacrylate erfolgt durch die erfindungsgemäße Kombination der kontrollierten radikalischen Polymerisation - insbesondere mittels RAFT-Verfahren - mit einem diradikalbildenden Initiator, der durch Energiezufuhr, insbesondere durch thermische Energie, unter Ausbildung eines Diradikals cyklisiert und in der Lage ist, die Polymerisation der Monomer zu initiieren. Dieses Verfahren kann noch durch die Verwendung weiterer, üblicher Polymerisationsinitiatoren und/oder gegebenenfalls weiterer Reglersubstanzen ergänzt werden. Es wird bei den üblichen, dem Fachmann bekannten Temperaturen in Substanz oder in Lösung polymerisiert.

Der diradikalbildende Initiator wird in der Regel in dem Monomer bzw. in den Monomeren gelöst und diese Lösung dann auf eine Temperatur erhitzt, bei der die Diradikale gebildet werden. Alternativ kann erfindungsgemäß auch derart vorgegangen werden, den Initiator und die Monomere in einem Lösungsmittel zu lösen, wobei die Siedetemperatur des Lösungsmittel bevorzugt oberhalb der Temperatur, bei sich die Diradikale bilden, gewählt ist. Als Lösungsmittel kommen insbesondere aprotische Lösungsmittel wie Kohlenwasserstoffe, wie Toluol und insbesondere Benzine mit einem Siedebereichs von 60 bis 120 °C, Ketone, wie vorzugsweise Aceton, Methylethylketon, Methylisobutylketon sowie Ester, wie Essigsäureethylester, in Frage.

Die Temperatur, bei der die Polymerisation idealerweise durchgeführt wird, ist wiederum abhängig von der Struktur des Diradikals-Initiators, was im Allgemeinen auch von Azo- und Peroxidinitiatoren dem Fachmann bekannt ist. Typischerweise wird eine Temperatur im Bereich von 50 °C bis 150 °C, vorzugsweise von 60 bis 120 °C, gewählt.

Es wird angenommen, dass die Polymerisation bei einer Temperatur startet, bei der der Initiator zu einem Diradikal zyklisiert Die Bildung von Diradikalen wurde in mehreren Publikationen diskutiert, von denen stellvertretend die von Nicolaou et al. in Angew. Chem., 1991, 103, 1453 und von Moore et al. in Macromolecules 2005, 38, 7266 genannt seien. So zeigen mehrere Systeme beim Erhitzen eine Cyclisierungsreaktion unter Bildung von Diradikalen (und Resonanzstrukturen davon), wobei die besonders im Sinne der Erfindung bevorzugte "klassische" Bergman-Cyklisierung aufgrund der leicht zugänglichen Precursormoleküle am häufigsten beschrieben ist

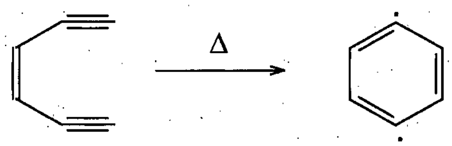


Im Rahmen der Erfindung können aber auch ähnliche Cyclisierungsreaktionen zur Bildung eines Diradikals eingesetzt werden, insbesondere nach einem der folgenden Schemata, worin Y für eine verbindende Gruppe wie beispielsweise MeN oder O steht (vgl. Struktur-Formeln 14 und 15 der diradikalbildenden Initiatoren oben).

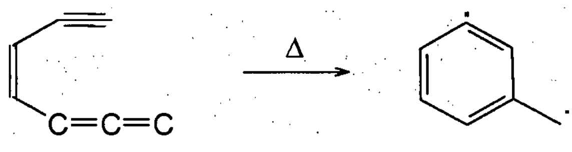

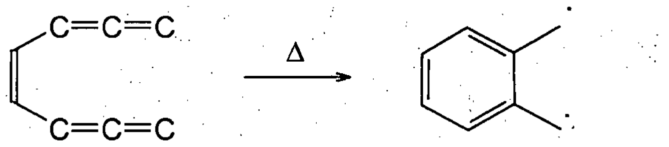

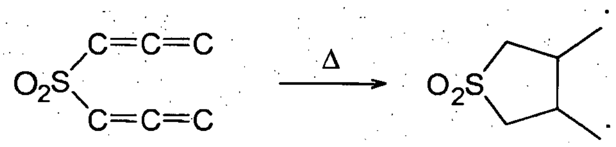

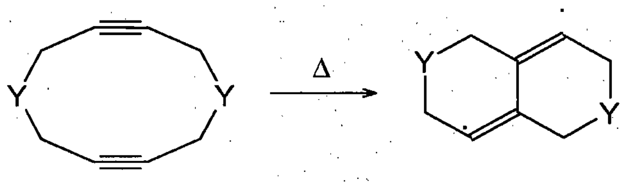

Erfindungsgemäße lassen sich auch diradikalbildende Initatoren einsetzen, die durch Einwirkung elektromagnetischer Strahlung, bevorzugt durch UV-Strahlung, unter Ausbildung eines Diradikals cyclisieren, wie beispielsweise entsprechende Endiin-Verbindungen; so von Turro et al. in J. Am. Chem. Soc. 1998, 120, 1835 beschrieben.

Das Diradikal initiiert die Polymerisation in Gegenwart von einem oder mehreren Monomeren, wobei von beiden Radikalen innerhalb des Diradikals ein Kettenwachstum erfolgt.

Zur Optimierung der Polymerisation der vorliegenden Erfindung sollte der diradikalbildende Initiator je nach Art des Monomers bzw. der Monomere gewählt werden. Monomere, die einen negativen "e"-Wert haben, z. B. aromatische Vinylmonomere, werden bevorzugt durch elektrophile Diradikale initiiert. Elektrophile Diradikal-Initiatoren sind als Initiatoren definiert, welche bevorzugt an elektronenreiche Doppelbindungen angreifen, und werden beispielsweise in Form der diradikalbildenden Initiatoren gemäß Formeln 1, 2, 4-6, 8-9, 11 und 13 eingesetzt. Monomere, die einen positiven "e"-Wert aufweisen, z.B. Acrylate, werden am besten durch nucleophile Radikale initiiert. Nucleophile Diradikal-Initiatoren sind als Initiatoren definiert, die bevorzugt an elektronenarme Doppelbindungen angreifen. Entsprechende diradikalbildende Initiatoren sind beispielhaft in den Formeln 3, 7, 10, 12, 14 und 15 wiedergegeben.

Stellen die Reste R (einschließlich R', R") oder ein Teil der Reste R der diradikalbildenden Initiatoren in den Formeln I-VI Gruppen mit einem +I-Effekt, also nichtelektronenziehenden Gruppen, dar, so sind die Diradikale in der Regel nucleophil. Allerdings kann, wenn diese Verbindungen eine elektronenziehende Gruppe wie eine Cyano-, Carboxy-, Nitro-, Sulfoxy- und ähnliche Funktionalität beinhalten, die Nucleophilie gesenkt werden und die Radikale sind tendenziell elektrophil.

Die Lage einer elektronenziehenden Gruppe in Bezug auf die Position des Radikals ist bei der Bestimmung der Elektrophilie oder der Nucleophilie wichtig. Eine elektronenziehende Gruppe, welche sich in Konjugation mit dem Radikal befindet, führt tendenziell zu einem elektrophilen Initiator wie in Struktur 8 gezeigt. Ist die elektronenziehende Gruppe hingegen getrennt vom Radikal angeordnet, weist der Initiator in der Regel einen nucleophilen Charakter auf, wie in Struktur 10 gezeigt. Die Begriffe nukleophil und elektrophil sind in der Technik gut bekannt und ermöglicht es dem Fachmann auf dem Gebiet, den geeigneten Initiator zu wählen.

Die benötigte Menge an diradikalbildenden Initiatoren in dem erfindungsgemäßen Verfahren ist generell keine kritisch Größe, vorausgesetzt sie ist zusammen mit der Temperatur der Polymerisation so gewählt, dass die Polymerisation mit einer akzeptablen Reaktionsgeschwindigkeit abläuft und die gewünschte Molmasse $M_w$ des Polymers erreicht wird. In der Regel wird die Reaktionsgeschwindigkeit durch zunehmende Initiatormengen begünstigt, jedoch wird dadurch gleichzeitig die Molmasse des Polymers gesenkt. Es werden in der Regel Initiatormengen von etwa 10 bis etwa 2.000 ppm, vorzugsweise von etwa 100 bis etwa 1.000 ppm und am meisten bevorzugt von etwa 200 bis etwa 600 ppm. eingesetzt

Die in dem Verfahren der vorliegenden Erfindung verwendeten diradikalbildenden Initiatoren können auch mit anderen diradikalbildenden Initiatoren oder mit anderen Initiatoren für radikalische Polymerisationsverfahren, z.B. Peroxide und Azoverbindungen kombiniert werden. Andere Initiatoren können gleichzeitig mit dem diradikalbildenden Initiator oder in jedem Stadium der Polymerisation zugegeben werden. Die Polymerisation kann ebenfalls erfindungsgemäß durch einen traditionellen Initiator, z.B. Peroxid- oder Azo-Initiator in einem ersten Schritt initiiert werden und anschließend kann die weitere Zugabe eines diradikalbildenden Initiators erfolgen. Prinzipiell eignen sich alle für Acrylate dem Fachmann geläufigen, üblichen traditionellen Initiatoren. Beispiele für Radikalquellen sind Peroxide, Hydroperoxide und Azoverbindungen, z.B. Dibenzoylperoxid, Cumolhydroperoxid, Cyclohexanonperoxid, Di-*tert*-butylperoxid, Cyclohexylsulfonylacetylperoxid, Diisopropylpercarbonat, *tert*-Butylperoktoat, Benzpinacol. In einer sehr bevorzugten Vorgehensweise wird als traditionelle radikalische Initiatoren 2,2'-Azobis(2-methylbutyronitril) (Vazo® 67™ der Fa. DuPont) oder 2,2'-Azobis(2-methylpropionitril) (2,2'-Azobisisobutyronitril; AIBN; Vazo® 64™ der Fa. DuPont) verwendet. Üblichen Mengen an Polymerisationsinitiatoren, die mit den diradikalbildenden Initiatoren kombiniert werden können, liegen bei 10 ppm bis 5.000 ppm, insbesondere bei 100 ppm bis 2.000 ppm.

Neben den hohen Molmassen der Polymere, insbesondere der Polyacrylate, ist eine enge Molmassenverteilung und somit eine niedrige Polydispersität PD von Vorteil, um scherfeste Haftklebemassen, die aus diesen erfindungsgemäßen Polymeren hergestellt werden, zu erhalten. Besonders vorteilhaft sind Polyacrylate, die eine Polydispersität ≤ 5, bevorzugt ≤ 3,5 haben, da diese Massen nach dem Vernetzen eine besonders gute Scherfestigkeit zeigen. Zudem ermöglicht die enge Molmassenverteilung eine leichtere Verarbeitung im Falle aus der Schmelze verarbeiteter Polymere, da die Fließviskosität gegenüber einem breiter verteilten Polyacrylat bei weitgehend gleichen Anwendungseigenschaften geringer ist.

Es wurde überraschend gefunden, dass hohe Umsätze sowie Polymere, insbesondere Polyacrylate, mit hohen Molmassen kombiniert mit einer engen Molmassenverteilung insbesondere vorteilhaft erzielt werden können, wenn die Konzentration des erfindungsgemäß eingesetzten Polymerisationsreglers, insbesondere des RAFT-Reglers, auf die Konzentration des erfindungsgemäßen diradikalbildenden Initiators abgestimmt wird. Dabei hat sich gezeigt, dass sich Polymere mit besonders positiven Eigenschaften insbesondere in Hinblick auf die vorstehenden Größen ergeben, wenn das Verhältnis V der Stoffmenge $n_1$ des Initiators (bzw. der Initiatoren, wenn mehrere diradikalbildende Initiatoren eingesetzt werden) zur Stoffmenge $n_R$ des Polymerisationsreglers (bzw. der Polymerisationsregler, wenn mehrere Polymerisationsregler eingesetzt werden) - also $V = n_I/n_R$ - im Bereich von $2 \leq V \leq 64$ liegt, besonders bevorzugt wenn V zwischen 3 und 32, noch bevorzugter zwischen 4 und 16 liegt. Wird dieses Verhältnis überschritten, weisen die Polymere deutlich breitere Molmassenverteilungen auf, was zur Erzeugung derartiger Polymere eingesetzt werden kann, häufig jedoch auch nicht erwünscht ist. Bei kleineren Initiator-Regler-Verhältnissen können hingegen in der Regel nur noch geringe Umsätze erzielt werden. Wird hingegen kein Polymerisationsregler - wie der erfindungsgemäße RAFT-Regler - verwendet, sinken die Umsätze erneut drastisch, da die intramolekulare Terminierung unter Ausbildung von Ringsystemen erneut vermehrt auftreten kann. Zusätzlich erfolgt dies unter Verlust der Kontrolle über die radikalische Polymerisation, wodurch die Polydispersität erhöht wird.

Überraschenderweise wurde damit gefunden, dass bei diradikalischer Initiierung, also bei Kettenwachstum an zwei Seiten des Initiators, Reglermengen ausreichend sind, die im Bereich der Mengen liegen, die für monoradikalische Initiierungen üblich sind, oder die teilweise sogar deutlich unter diesen Mengen für monoradikalische Initiierungen liegen. Trotzdem lassen sich überraschend gute Polymerisationsgeschwindigkeiten realisieren. Hierfür ist es insbesondere günstig, die bevorzugt genannten Regler, insbesondere RAFT-Regler einzusetzen.

Die gewichtsmittleren Molmassen $M_W$ der erfindungsgemäß erhältlichen Polyacrylate liegen bevorzugt in einem Bereich von 20.000 bis 2.000.000 g/mol; sehr bevorzugt in einem Bereich von 100.000 bis 1.000.000 g/mol, äußerst bevorzugt in einem Bereich von 150.000 bis 750.000 g/mol (die Bestimmung mittlerer Molmassen $M_w$ und $M_n$ und von Polydispersitäten PD erfolgt mittels Größenausschlusschromatographie (Gelpermeationschromatographie, GPC); Kalibrierung: PMMA-Standards (Polymethylmethacrylat-Kalibrierung); siehe Messmethode A2; experimenteller Teil].

Die Polydispersitäten $PD = M_W/M_N$ ($M_W$ = gewichtsmittlere Molmasse, $M_N$ = zahlenmittlere Molmasse) der erfindungsgemäß erhältlichen Polyacrylate liegen bevorzugt unterhalb von 5, sehr bevorzugt unterhalb von 3,5. Insbesondere lassen sich vorteilhaft Polymere mit engen Polydispersitäten (≤ 5, bevorzugt ≤ 3,5), deren gewichtsmittlere Molmasse mindestens 450.000 g/mol beträgt.

Das Polyacrylat hat vorzugsweise einen K-Wert von 30 bis 90, besonders bevorzugt von 40 bis 80, gemessen in Toluol (1%ige Lösung, 21 °C). Der K-Wert nach Fikentscher ist ein Maß für die Molmasse und Viskosität des Polymerisats (siehe Messmethode A1; experimenteller Teil).

Gegenstand der Erfindung sind weiterhin die durch das erfindungsgemäße Verfahren erhaltenen Polymere, insbesondere Klebemassen, bevorzugt Haftklebemassen. Insbesondere für die Verwendung als Haftklebemassen können der Basispolymerkomponente (bzw. der schon teilabgemischten Haftklebemasse) übliche, zur Erzielung und/oder Verbesserung der haftklebrigen Eigenschaften zweckdienliche Zusätze oder zur Erzielung und/oder Verbesserung anderer Eigenschaften zweckdienliche Additive zugemischt werden.

Mittels des erfindungsgemäßen Verfahrens können unerwartet hervorragend Haftklebemassen auf Basis langkettiger Polymere mit enger Molamssenverteilung erhalten werden. Erfindungsgemäß besonders vorteilhaft sind insbesondere Haftklebemassen, deren Basispolymerkomponente zumindest ein Polymer mit einer gewichtsmittleren Molmasse von $M_W \geq 450.000$ g/mol und einer Polydispersität von $PD \leq 5$, bevorzugt $\leq 3,5$, umfasst. Das betreffende Polymer beinhaltet im Polymerrückgrat ein cyclisches Strukturelement beinhaltet, wie dieses durch das erfindungsgemäße Verfahren eingebaut wird.

Bei Verwendung der weiter oben beschriebenen diradikalbildenden Initiatoren ist das cyclische Strukturelement ein Element ist aus der Gruppe umfassend

- Fünfringe,
- aromatische Sechsringe,
- kondensierte aromatische Systeme,
- heterosubstituierte Bicyclo-[4.4.0]-Decdiene mit einem konjugierten $\pi$-System, das sich über die Brückenbindung erstreckt, insbesondere 4,9-heterosubstituiertes Bicyclo-[4.4.0]-Dec-1,6-diene.

Wird zudem zumindest einer der oben angeführten RAFT-Regler eingesetzt, um die Polymerisation zu regeln, so weisen die erhaltenen Polymere, insbesondere die Klebemassen bzw. Haftklebemassen, Strukturelemente des entsprechenden RAFT-Reglers nämlich insbesondere die Gruppe S-C=X mit X = S, O oder N, in den Polymerketten auf. Weiter sind Gegenstand der Erfindung daher Polymere auf Acrylatbasis, insbesondere als Klebemasse, bevorzugt als Haftklebemasse, die die Gruppe S-C=X mit X = S, O oder N in den Polymerketten enthalten, insbesondere solche Polymere dieser Art erhältlich durch das erfindungsgemäße Verfahren.

Es ist sehr vorteilhaft insbesondere für die Verwendung der durch das erfindungsgemäße Verfahren erhältlichen Polymere als Haftklebemassen, wenn bei Anwesenheit von mehr als einem Polymer in der Basispolymerkomponente die Polydispersität über alle Makromoleküle, also die Polydispersität aller Polymere gemeinsam, nicht größer als 5, bevorzugt nicht größer als 3,5 ist, wobei insbesondere bevorzugt die gewichtsmittleren Molmassen aller Polymere mindestens 450.000 g/mol betragen.

Zur Abmischung der Basispolymerkomponente - insbesondere zur Einstellung der Eigenschaften bei der Verwendung als Haftklebemasse - können insbesondere Harze beigemischt werden, insbesondere klebrigmachende Harze. Als klebrigmachende Harze sind beispielsweise die bekannten und in der Literatur beschriebenen Klebharze einsetzbar. Im allgemeinen lassen sich alle mit der entsprechenden Klebemasse kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Beispielhaft genannt seien die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Kombinationen dieser und weiterer Harze können gezielt eingesetzt werden, um die Eigenschaften der resultierenden Klebemasse wunschgemäß einzustellen. Besonders bevorzugt lassen sich alle mit dem entsprechenden Polyacrylat kompatiblen (löslichen) Harze einsetzen. In einer besonders bevorzugten Vorgehensweise werden Terpenphenolharze und/oder Kolophoniumester hinzugesetzt.

Weiterhin können optional Füllstoffe, insbesondere pulver- und granulatförmige Füllstoffe (z. B. Fasern, Voll- oder Hohlglaskugeln, Mikrokugeln aus anderen Materialien, Kieselsäure, Silikate), Farbstoffe und Pigmente, besonders auch abrasive und verstärkende, wie z.B. Aerosile (pyrogene Kieselsäuren), Kreiden ($CaCO_3$) Titandioxide, Zinkoxide und Ruße verwendet und gerade im Falle der Schmelzeverarbeitung auch zu hohen Anteilen von 0,5 bis 50 Gew.-%, bezogen auf die Gesamtrezeptur, eingesetzt werden. Sehr bevorzugt können Aerosile und verschiedene Kreideformen als Füllstoff eingesetzt werden, wobei besonders bevorzugt Mikrosöhl-Kreide eingesetzt wird. Bei bevorzugten Anteilen bis zu 30 Gew.-% verändern sich die klebtechnischen Eigenschaften (Scherfestigkeit bei RT, Sofortklebkraft auf Stahl und PE) durch den Füllstoffzusatz praktisch nicht.

Weiterhin können, gerade im Falle der Substanzpolymerisation und der weiteren Verarbeitung aus der Polymerschmelze, schwerentflammbare Füllstoffe, wie beispielsweise Ammoniumpolyphosphat, weiterhin elektrisch leitfähige Füllstoffe (wie beispielsweise Leitruß, Kohlenstofffasern und/oder silberbeschichtete Kugeln), weiterhin thermisch leitfähige Materialien (wie beispielsweise Bornitrid, Aluminiumoxid, Siliciumcarbid), weiterhin ferromagnetische Additive (wie beispielsweise Eisen-(III)-oxide), weiterhin Additive zur Volumenerhöhung, insbesondere zur Herstellung geschäumter Schichten bzw. syntaktischer Schäume, (wie beispielsweise Blähmittel, Glasvollkugeln, Glashohlkugeln, carbonisierte Mikrokugeln, phenolische Mikrohohlkugeln Mikrokugeln aus anderen Materialien, expandierbare Microballons (Expancel® der Fa. AkzoNobel), Kieselsäure, Silicate, organisch nachwachsende Rohstoffe, beispielsweise Holzmehl, organische und/oder anorganische Nanopartikel, Fasern), weiterhin Alterungsschutzmitteln, Lichtschutzmitteln, Ozonschutzmitteln, Compoundierungsmittel und/oder Blähmittel zugegeben oder eincompoundiert werden. Als Alterungsschutzmittel können bevorzugt sowohl primäre, z.B. 4-Methoxyphenol oder Irganox® 1076, als auch sekundäre Alterungsschutzmittel, z.B. Irgafos® TNPP oder Irgafos® 168 der Fa. BASF, auch in Kombination miteinander eingesetzt werden. Hier soll nur an dieser Stelle auf weitere entsprechenden Irganox® Typen der Fa. BASF bzw. Hostanox® der Firma Clariant verwiesen werden. Als weitere hervorragende Mittel gegen Alterung können Phenothiazin (C-Radikalfänger) sowie Hydrochinonmethylether in Gegenwart von Sauerstoff sowie Sauerstoff selbst eingesetzt werden.

Optional können die üblichen Weichmacher (Plastifizierungsmittel), insbesondere in Konzentrationen von bis zu 5 Gew.-%, zugesetzt werden. Als Weichmacher können beispielsweise niedermolekulare Polyacrylate, Phthalate, wasserlösliche Weichmacher, Weichharze, Phosphate, Polyphosphate, Adipate und/oder Citrate eingesetzt werden.

Bevorzugt wird die innere Festigkeit (Kohäsion) der Haftklebemasse durch eine Vernetzung gesteigert. Hierzu können den acrylathaltigen Haftklebemassen optional verträgliche Vernetzersubstanzen zugesetzt werden. Als Vernetzer eignen sich z. B. Metallchelate, multifunktionelle Isocyanate, multifunktionelle Amine, multifunktionelle Epoxide, multifunktionelle Oxazoline und multifunktionelle Carbodiimide, die mit im Polymer enthaltenen und reaktiven Funktionalitäten reagieren und die jeweils für sich oder auch in Kombinbationen miteinander einsetzbar sind. Auch multifunktionelle Acrylate lassen sich vorteilhaft als Vernetzer für eine actinische Bestrahlung verwenden.

Durch die Vernetzung erhöhen sich die Kohäsion des Polymers und damit auch die Scherfestigkeit. Die Verknüpfungen sind sehr stabil. Dies ermöglicht sehr alterungsstabile und wärmebeständige Produkte wie Klebebänder, viskoelastische Trägermaterialien oder Formkörper.

**Weitere Verfahrensdurchführung**

Im Falle der mittels Substanzpolymerisation hergestellten Polyacrylate findet die weitere Verarbeitung bevorzugt aus der Schmelze statt, wo beispielweise auch die Compoundierung mit den gegebenenfalls zuzusetzenden Additiven erfolgen kann. Das Polymer wird im Anschluss in einen Compounder überführt, wobei in besonderen Ausführungen des erfindungsgemäßen Verfahrens die Polymerisation und die Compoundierung im selben Reaktor stattfinden können.

Insbesondere kann als Compounder ein Extruder eingesetzt werden. Die Polymere liegen im Compounder in der Schmelze vor, entweder indem sie bereits im Schmelzzustand eingegeben werden oder indem sie im Compounder bis zur Schmelze erhitzt werden. Im Compounder werden die Polymerisate durch Beheizung in der Schmelze gehalten und es können die oben genannten Harze, Füllstoffe und Vernetzer compoundiert und homogenisiert werden. Die Prozesstemperatur im Compounder liegt üblicherweise zwischen 80 bis 150 °C, insbesondere zwischen 100 und 120 °C.

Nach der Compoundierung der Masse erfolgt die Weiterverarbeitung des Polymers, beispielweise - insbesondere bei Verwendung als (Haft-)Klebemasse in Form eines Klebebandes bzw. Haftklebebandes - die Beschichtung auf einen permanenten oder auf einen temporären Träger (der permanente Träger verbleibt bei der Anwendung mit der Klebemassenschicht verbunden, während der temporäre Träger in dem weiteren Verarbeitungsprozess, zum Beispiel der Konfektionierung des Klebebandes, oder bei der Anwendung von der Klebemassenschicht wieder abgenommen wird).

Die Beschichtung der Selbstklebemassen kann mit dem Fachmann bekannten Hotmelt-Beschichtungsdüsen oder bevorzugt mit Walzenauftragswerken, auch Beschichtungs-kalander genannt, erfolgen. Die Beschichtungskalander können vorteilhaft aus zwei, drei, vier oder mehr Walzen bestehen.

Die Beschichtung kann insbesondere vorteilhaft entsprechend den Beschichtungsverfahren, wie sie in der WO 2006/027387 A1 von Seite 12, Zeile 5 bis Seite 20, Zeile 13 dargestellt sind, und zwar insbesondere unter den Abschnitten "Variante A" (Seite 12), "Variante B" (Seite13), "Variante C" (Seite 15), "Verfahren D" (Seite 17), "Variante E" (Seite 19) sowie die Figuren Fig. 1 bis 6. Die genannten Offenbarungsstellen aus der WO 2006/027387 A1 und zusätzlich die EP 1 978 069 A1 seien daher explizit in den Offenbarungsgehalt der vorliegenden Schrift eingeschlossen.

Im Falle der mittels Lösungsmittelpolymerisation hergestellten Polyacrylate ist es für das erfinderische Verfahren vorteilhaft, wenn das Polymer für die Verwendung als Haftklebemasse aus der Lösung auf einen Träger oder auf ein Trägermaterial als Schicht aufgebracht wird, jedoch ist das Entfernen des Lösungsmittels und die weitere Verarbeitung als Schmelze wie oben beschrieben eine ebenfalls vorteilhafte Ausführung des erfinderischen Verfahrens.

Für die soeben dargestellten Varianten des erfinderischen Verfahrens werden bevorzugt als Trägermaterialien die dem Fachmann geläufigen und üblichen Materialien, wie Folien (Polyurethane, Polyester, Polyethylenterephthalat (PET), Polyethylen (PE), Polypropylen (PP), Biaxial orientiertes PP (BOPP), Monoaxial orientiertes PP (MOPP), Polyvinylchlorid (PVC)), Vliese, Schäume, Gewebe und Gewebefolien sowie Trennpapier (Glassine, Niederdruckpolyethylen (HDPE), Hochdruckpolyethylen (LDPE)) verwendet. Diese Aufzählung ist nicht abschließend.

**Vorteilhafte Anwendungen**

Die erfindungsgemäß hergestellten Polyacrylate können für breitgefächerte Anwendungen eingesetzt werden. Nachstehend seien einige besonders vorteilhafte Einsatzgebiete beispielhaft dargestellt.

Das mit dem erfindungsgemäßen Verfahren hergestellte Polymer, insbesondere Polyacrylat, wird insbesondere als Haftklebemasse verwendet, bevorzugt als Haftklebemasse für ein Klebeband, wobei die Acrylathaftklebemasse als ein- oder doppelseitiger Film auf einer Trägerfolie vorliegt. Insbesondere gut geeignet sind diese Polyacrylate, wenn ein hoher Masseauftrag in einer Schicht gefordert ist, da mit diesen Polymeren und diesen Beschichtungsverfahren, insbesondere der Beschichtung aus der Schmelze, ein nahezu beliebig hoher Masseauftrag, bevorzugt mehr als 100 $g/m^2$, besonders bevorzugt mehr als 200 $g/m^2$, möglich ist. Günstige Anwendungen, ohne Anspruch auf Vollständigkeit, sind beispielsweise technische Klebebänder, insbesondere für den Einsatz im Bauwesen, z.B. Isolierbänder, Korrosionsschutzbänder, Aluminiumklebebänder, gewebeverstärkte Folienklebebänder (Duct-Tapes), Bauspezialklebebänder, z.B. Dampfsperren, Montageklebebänder, Kabelwickelbänder, selbstklebende Folien und/oder Papieretiketten.

Auch zum Einsatz als trägerloses Klebeband (als sogenanntes "Transferklebeband") sind die erfindungsgemäß

hergestellten Klebemassen, insbesondere Haftklebemassen, hervorragend geeignet. Derartige (Haft-)Klebemassenschichten werden zur besseren Handhabbarkeit üblicherweise zwischenzeitlich auf temporäre Träger aufgelegt, die zur Verwendung wieder entfernt werden.

Das erfindungsgemäß hergestellte Polyacrylat kann auch als Heißsiegelklebemasse in Transferklebebändern oder in ein- oder doppelseitigen Klebebändern vorliegen. Auch hier kann für trägerhaltige Haftklebebänder der Träger ein erfindungsgemäß erhaltenes viskoelastisches Polyacrylat sein.

Statt beidseitig eine Haftklebeschicht zu kaschieren, kann auch mindestens einseitig eine Schmelzklebeschicht oder thermisch aktivierbare Klebschicht verwendet werden. Derartige asymmetrische Klebbänder erlauben das Verkleben kritischer Substrate mit hoher Verklebungsfestigkeit. Ein derartiges Klebeband kann beispielsweise zur Befestigung von EPDM-Gummiprofilen an Fahrzeugen verwendet werden.

**Experimenteller Teil**

Die folgenden beispielhaften Experimente sollen die Erfindung näher erläutern, ohne dass durch die Wahl der angegebenen Beispiele die Erfindung unnötig eingeschränkt werden soll.

<u>Messmethoden (allgemein):</u>

<u>K-Wert_(nach_FIKENTSCHER)_(Messmethode A1):</u>

Der K-Wert ist ein Maß für die durchschnittliche Molekülgröße hochpolymerer Stoffe. Zur Messung wurden einprozentige (1g/100 mL) toluolische Polymerlösungen herstellt und mit Hilfe eines VOGEL-OSSAG-Viskosimeters deren kinematische Viskositäten bestimmt. Nach Normierung auf die Viskosität des Toluols wird die relative Viskosität erhalten, aus der sich nach FIKENTSCHER der K-Wert errechnen lässt (Polymer 1967, 8, 381 ff.)

<u>Gelpermeationschromatographie GPC (Messmethode A2):</u>

Die Angaben der gewichtsmittleren Molmasse $M_W$ und der Polydispersität PD in dieser Schrift beziehen sich auf die Bestimmung per Gelpermeationschromatographie. Die Bestimmung erfolgt an 100 $\mu$L klarfiltrierter Probe (Probenkonzentration 4 g/L). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 $\mu$, $10^3$ Å, ID 8,0 mm x 50 mm verwendet. Zur Auftrennung werden die Säulen des Typs PSS-SDV, 5 $\mu$, $10^3$ Å sowie $10^5$ Å und $10^6$ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 mL pro Minute. Die Kalibrierung erfolgt gegen PMMA-Standards (Polymethylmethacrylat-Kalibrierung)].

<u>Feststoffgehalt (Messmethode A3):</u>

Der Feststoffgehalt ist ein Maß für den Anteil an nicht verdampfbaren Bestandteilen in einer Polymerlösung. Er wird gravimetrisch bestimmt, indem man die Lösung einwiegt, dann für 2 Stunden bei 120 °C im Trockenschrank die verdampfbaren Anteile abdampft und den Rückstand zurückwiegt.

<u>Messmethoden (insbesondere Haftklebemassen):</u>

<u>180° Klebkrafttest (Messmethode H1):</u>

Ein 20 mm breiter Streifen einer auf Polyester als Schicht aufgetragenen Acrylathaftklebemasse wurde auf Stahlplatten aufgebracht, die zuvor zweimal mit Aceton und einmal mit Isopropanol gewaschen wurden. Der Haftklebestreifen wurde zweimal mit einem Anpressdruck entsprechend einem Gewicht von 2 kg auf das Substrat aufgedrückt. Das Klebeband wurde anschließend sofort mit einer Geschwindigkeit von 300 mm/min und in einem Winkel von 180° vom Substrat abgezogen. Alle Messungen wurden bei Raumtemperatur durchgeführt.
Die Messergebnisse sind in N/cm angegeben und sind gemittelt aus drei Messungen. Analog wurde die Klebkraft auf Polyethylen (PE) bestimmt.

<u>Scherstandzet (Messmethode H2):</u>

Ein 13 mm breiter und mehr als 20 mm (beispielsweise 30 mm) langer Streifen des Klebebandes wurde auf eine glatte Stahloberfläche, die dreimal mit Aceton und einmal mit Isopropanol gereinigt wurde, derart aufgebracht, dass

die Verklebungsfläche betrug 20 mm · 13 mm (Länge · Breite) beträgt, die Verklebungsfläche mit einer seiner schmalen Kanten bündig an einer der Kanten der Stahlplatte anliegt und das Klebeband über diese Kante der Stahlplatte frei herausragt (beispielsweise um 10 mm entsprechend einer oben angegebener Länge von 30 mm). Anschließend wurde das Klebeband im Bereich der Verklebungsfläche viermal mit einem Anpressdruck entsprechend einem Gewicht von 2 kg auf die Stahlplatte gedrückt.
Die Stahlplatte wurde dann derart aufgehängt, dass die besagte Kante der Stahlplatte nach unten zeigt und das überstehende Ende des Klebebandes frei nach unten hängt. Bei Raumtemperatur wurde ein 1 kg-Gewicht an dem überstehenden Ende des Klebebandes befestigt und der Lösevorgang des Klebebandes beobachtet. Die Messung wird bei Normalklima (23 °C, 55 % Luftfeuchtigkeit) und bei 70 °C in einem Wärmeschrank durchgeführt. Die gemessenen Scherstandzeiten sind die Zeiten, nach denen das Klebeband vom Träger abfiel (Zeiten bis zum vollständigen Ablösen des Klebebandes vom Untergrund; Abbruch der Messung bei 10.000 min), in Minuten angegeben und entsprechen dem arithmetischen Mittelwert aus drei Messungen.

Mikroschertest (Messmethode H3)

Dieser Test dient der Schnellprüfung der Scherfestigkeit von Klebebändern unter Temperaturbelastung.

*Messprobenpräparation für Mikroschertest:*

Ein aus dem jeweiligen Probenmuster geschnittenes Klebeband (Länge ca. 50 mm, Breite 10 mm) wird auf eine mit Aceton gereinigte Stahl-Prüfplatte verklebt, so dass die Stahlplatte das Klebeband rechts und links überragt und dass das Klebeband die Prüfplatte am oberen Rand um 2 mm überragt. Die Verklebungsfläche der Probe beträgt Höhe · Breite = 13mm · 10mm. Die Verklebungsstelle wird anschließend mit einer 2 kg-Stahlrolle und einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

*Mikroschertest:*

Das zu messende Probenmuster wird am unteren Ende mit einem Gewicht von 100 g belastet. Die Prüftemperatur beträgt 40 °C, die Prüfdauer 30 Minuten (15 Minuten Belastung und 15 Minuten Entlastung). Die Scherstrecke nach der vorgegebenen Testdauer bei konstanter Temperatur wird als Ergebnis in $\mu$m angegeben, und zwar als Maximalwert ["max"; maximale Scherstrecke durch 15 minütige Belastung]; als Minimalwert ["min"; Scherstrecke ("Restauslenkung") 15 min nach Entlastung; bei Entlastung erfolgt eine Rückbewegung durch Relaxation]. Angegeben wird ebenfalls der elastische Anteil in Prozent ["elast"; elastischer Anteil = (max - min) · 100 / max].

Kommerziell erhältliche, eingesetzte Chemikalien

| *Chemische Verbindung* | *Handelsname* | *Hersteller* | *CAS-Nr.* |
|---|---|---|---|
| 2,2'-Azobis(2-methylbutyronitril) | Vazo® 67 | DuPont | 13472-08-7 |
| Bis-(4-*tert*-butylcyclohexyl)peroxydicarbonat | Perkadox® 16 | Akzo Nobel | 15520-11-3 |
| 1-Cyano-1-methylethylbenzol-carbodithioat | (RAFT-Regler) | Sigma-Aldrich | 201611-85-0 |
| Klebharz auf Terpen-Phenolbasis (Erweichungspunkt 105 °C, Hydroxylwert 30-60) | Dertophene® T105 | DRT, Frankreich | 73597-48-5 |
| Aluminiumacetylacetonat | | Sigma-Aldrich | 13963-57-0 |

Synthese des diradikalbildenden Initiators

Die Synthese des Diradikal-Initiators 3,4-Benzocyclodec-3-en-1,5-diin (Formel 12) erfolgte nach der in J. Org. Chem. 1994, 59, 5038 beschriebenen Methode.

Allgemeine Versuchsvorschrift für die Substanzpolymerisation (AV1)

0,05 Gew.-% bezogen auf die später hinzugegebene Menge des Monomers des Diradikal-Initiators 3,4-Benzocyclodec-3-en-1,5-diin wurden unter Stickstoff in einem Rohr vorgelgt und anschließend wurden die Monomere und der RAFT-Regler 1-Cyano-1-methylethylbenzolcarbodithioat hinzugegeben. Das Rohr wurde verschlossen und in einem Ölbad für drei Stunden auf 80 °C erhitzt, anschließend wurden mit 0,15 Gew.-% und nach weiteren zwei Stunden erneut mit 0,15 Gew.-% Bis-(4-*tert*-butylcyclohexyl)-peroxydicarbonat nachinitiiert. Nach 12 h wurde die Polymerisation abgebrochen und für die weitere Verarbeitung zur Herstellung der Haftklebemassen kann das Polymer ohne weitere Aufarbeitung eingesetzt werden. Für die Analytik wurde das Polymer in THF gelöst und anschließend mit kaltem Methanol gefällt. Das Polymer wurde abfiltriert und im Vakuum getrocknet. Die Umsatzbestimmung erfolgte gravimetrisch.

Allgemeine Versuchsvorschrift für die Lösungspolymerisation (AV2)

Ein für radikalische Polymerisationen konventioneller Reaktor wurde mit den Monomeren und dem RAFT-Regler 1-Cyano-1-methylethylbenzolcarbodithioat befüllt. Nach 45minütiger Durchleitung von Stickstoffgas unter Rühren wurde der Reaktor auf 58 °C hochgeheizt und 0,05 Gew.-% des Diradikal-Initiators 3,4-Benzocyclodec-3-en-1,5-diin hinzugegeben. Anschließend wurde das äußere Heizbad auf 75 °C erwärmt und die Reaktion konstant bei dieser Außentemperatur durchgeführt. Nach 4 h wurde die Reaktion mit Lösungsmittel verdünnt.
Nach 5 sowie nach 7 h wurde jeweils mit 0,15 Gew.-% Bis-(4-*tert*-butylcyclohexyl)-peroxydicarbonat nachinitiiert. Nach 22 h Reaktionszeit wurde die Polymerisation abgebrochen und auf Raumtemperatur abgekühlt. Der Umsatz der Polymerisation wurde nach Ausfällen mit kaltem Methanol, Abfiltrieren und Trocknen des Polymers im Vakuum gravimetrisch bestimmt.

Beispiele Haftkleber

Herstellung der Polymere P1 bis P9

Basispolymer P1

Basispolymer P1 wurde mittels Substanzpolymerisation nach AV1 hergestellt, wobei 300 g 2-Ethylhexylacrylat, 670 g n-Butylacrylat, 30 g Acrylsäure, 0,5 g 3,4-Benzocyclodec-3-en-1,5-diin (2,78 mmol) und 61,4 mg 1-Cyano-1-methylethylbenzolcarbodithioat (0,28 mmol, Stoffmengenverhältnis Initiator/Regler = 10) eingesetzt wurden. Nach drei sowie nach fünf Stunden wurde die Reaktion mit jeweils 1,5 g Bis-(4-tert-butylcyclohexyl)peroxydicarbonat nachinitiiert.

Basispolymer P2

Basispolymer P2 wurde mittels Lösungspolymerisation nach AV2 hergestellt, wobei 30 kg 2-Ethylhexylacrylat, 67 kg n-Butylacrylat, 3 kg Acrylsäure, 50 g 3,4-Benzocyclodec-3-en-1,5-diin (0,28 mol) und 15,4 g 1-Cyano-1-methylethylbenzolcarbodithioat (69,4 mmol, Stoffmengenverhältnis Initiator/Regler = 4) eingesetzt wurden. Als Lösungsmittel wurden 66 kg.Aceton verwendet und nach vier Stunden mit 20 kg Aceton verdünnt. Nach fünf sowie nach sieben Stunden wurde die Reaktion mit jeweils 150 g Bis-(4-tert-butylcyclohexyl)peroxydicarbonat nachinitiiert.

Basispolymer P3

Basispolymer P3 wurde mittels Lösungspolymerisation nach AV2 hergestellt, wobei 30 kg 2-Ethylhexylacrylat, 67 kg n-Butylacrylat, 3 kg Acrylsäure, 50 g 3,4-Benzocyclodec-3-en-1,5-diin (0,28 mol) und 6,2 g 1-Cyano-1-methylethylbenzolcarbodithioat (28 mmol, Stoffmengenverhältnis Initiator/Regler = 10) eingesetzt wurden. Als Lösungsmittel wurden 66 kg.Aceton verwendet und nach vier Stunden mit 20 kg Aceton verdünnt. Nach fünf sowie nach sieben Stunden wurde die Reaktion mit jeweils 150 g Bis-(4-tert-butylcyclohexyl)peroxydicarbonat nachinitiiert.

Basispolymer P4

Basispolymer P4 wurde mittels Lösungspolymerisation nach AV2 hergestellt, wobei 30 kg 2-Ethylhexylacrylat, 67 kg n-Butylacrylat, 3 kg Acrylsäure, 50 g 3,4-Benzocyclodec-3-en-1,5-diin (0,28 mol) und 3,87 g 1-Cyano-1-methylethylbenzolcarbodithioat (17,5 mmol, Stoffmengenverhältnis Initiator/Regler = 16) eingesetzt wurden. Als Lösungsmittel wurden 66 kg.Aceton verwendet und nach vier Stunden mit 20 kg Aceton verdünnt. Nach fünf sowie nach sieben Stunden wurde die Reaktion mit jeweils 150 g Bis-(4-*tert*-butylcyclo-hexyl)peroxydicarbonat nachinitiiert.

Vergleichspolymer P5 (Substanzpolymerisation ohne RAFT-Regler)

Vergleichspolymer P5 wurde mittels Substanzpolymerisation nach AV1 hergestellt, wobei 300 g 2-Ethylhexylacrylat, 670 g n-Butylacrylat, 30 g Acrylsäure und 0,5 g 3,4-Benzo-cyclodec-3-en-1,5-diin (2,78 mmol) eingesetzt wurden. Nach drei sowie nach fünf Stunden wurde die Reaktion mit jeweils 1,5 g Bis-(4-*tert*-butylcyclohexyl)peroxydicarbonat nachinitiiert.

Vergleichspolymer P6 (Lösungspolymerisation ohne RAFT-Regler)

Vergleichspolymer P6 wurde mittels Lösungspolymerisation nach AV2 hergestellt, wobei 30 kg 2-Ethylhexylacrylat, 67 kg n-Butylacrylat, 3 kg Acrylsäure und 50 g 3,4-Benzocyclodec-3-en-1,5-diin (0,28 mol) eingesetzt wurden. Als Lösungsmittel wurden 66 kg.Aceton verwendet und nach vier Stunden mit 20 kg Aceton verdünnt. Nach fünf sowie nach sieben Stunden wurde die Reaktion mit jeweils 150 g Bis-(4-*tert*-butylcyclohexyl)peroxydicarbonat nachinitiiert.

Vergleichspolymer P7 (Initiator-Regler-Verhältriis > 64)

Vergleichspolymer P7 wurde mittels Lösungspolymerisation nach AV2 hergestellt, wobei 30 kg 2-Ethylhexylacrylat, 67 kg n-Butylacrylat, 3 kg Acrylsäure, 50 g 3,4-Benzocyclodec-3-en-1,5-diin (0,28 mol) und 88,5 mg 1-Cyano-1-methylethylbenzolcarbodithioat (4 mmol, Stoffmengenverhältnis Initiator/Regler = 70) eingesetzt wurden. Als Lösungsmittel wurden 66 kg.Aceton verwendet und nach vier Stunden mit 20 kg Aceton verdünnt. Nach fünf sowie nach sieben Stunden wurde die Reaktion mit jeweils 150 g Bis-(4-*tert*-butylcyclohexyl)peroxydicarbonat nachinitiiert.

Vergleichspolymer P8 (Initiator-Regler-Verhältnis < 2)

Vergleichspolymer P8 wurde mittels Lösungspolymerisation nach AV2 hergestellt, wobei 30 kg 2-Ethylhexylacrylat, 67 kg n-Butylacrylat, 3 kg Acrylsäure, 50 g 3,4-Benzocyclodec-3-en-1,5-diin (0,28 mol) und 62 g 1-Cyano-1-methylethylbenzolcarbodithioat (0,28 mol, Stoffmengenverhältnis Initiator/Regler = 1) eingesetzt wurden. Als Lösungsmittel wurden 66 kg.Aceton verwendet und nach vier Stunden mit 20 kg Aceton verdünnt. Nach fünf sowie nach sieben Stunden wurde die Reaktion mit jeweils 150 g Bis-(4-*tert*-butylcyclohexyl)peroxydicarbonat nachinitiiert.

Vergleichspolymer P9 (Verwendung eines Azo- anstatt des Diradikal-Initiators)

Vergleichspolymer P9 wurde mittels Lösungspolymerisation nach AV2 hergestellt, wobei 30 kg 2-Ethylhexylacrylat, 67 kg n-Butylacrylat, 3 kg Acrylsäure, 107,7 g 2,2'-Azobis(2-methylbutyronitril) (0,56 mol) und 6,2 g 1-Cyano-1-methylethylbenzolcarbodithioat (28 mmol, Stoffmengenverhältnis Initiator/Regler = 10) eingesetzt wurden. Als Lösungsmittel wurden 66 kg.Aceton verwendet und nach vier Stunden mit 20 kg Aceton verdünnt. Nach fünf sowie nach sieben Stunden wurde die Reaktion mit jeweils 150 g Bis-(4-*tert*-butylcyclohexyl)peroxydicarbonat nachinitiiert.

Tabelle 1: Analytische Daten der Polymere P1 bis P9

| **Polymer** | **Initiator** [mol] | **RAFT-Regler** [mmol] | **Initiator-Regler-Verhältnis** | **Umsatz** [%] | $\mathbf{M_N}$ [g/mol] | **PD** |
|---|---|---|---|---|---|---|
| **P1** | 0,28 | 28 | 10 | 99,3 | 350.000 | 1,8 |
| **P2** | 0,28 | 70 | 4 | 99,4 | 311.000 | 1,2 |
| **P3** | 0,28 | 28 | 10 | 99,2 | 372.000 | 1,9 |
| **P4** | 0,28 | 17,5 | 16 | 99,1 | 469.000 | 2,4 |
| **P5** | 0,28 | - | - | 32,0 | 564.000 | 18,5 |
| **P6** | 0,28 | - | - | 33,5 | 583.000 | 12,6 |
| **P7** | 0,28 | 3,9 | 70 | 84,2 | 552.000 | 5,6 |
| **P8** | 0,28 | 280 | 1 | 64,2 | 292.000 | 1,1 |
| **P9** | 0,56[1)] | 28 | 10 | 99,2 | 150.000 | 1,8 |

[1)] Anstatt des Diradikal-Initiators 3,4-Benzocydodec-3-en-1,5-diin wurde der monofunktionelle Azo-Initiator 2,2'-Azobis(2-methylbutyronitril) verwendet, wobei die Stoffmenge verdoppelt wurde, um die Anzahl der theoretisch denkbaren Radikalfunktionen konstant zu halten.

Wie den Daten der Tabelle 1 zu entnehmen ist, resultiert die Initiierung der Polymerisation mit einem Diradikal-Initiator kombiniert mit einem RAFT-Regler in Polymeren, die hohe Molmassen mit engen Molmassenverteilungen (niedrige Polydispersitäten) aufweisen und die Polymerisation kann mit sehr guten Umsätzen durchgeführt werden. Wird das Verhältnis von Initiator zu Regler so verändert, dass der Quotient größer einem erfindungsgemäßen Wert von 64 ist, verschlechtert sich die Polydispersität und die Umsätze sinken leicht (Vergleichsbeispiel P7). Wird das Verhältnis so gewählt, dass es kleiner einem erfindungsgemäßen Wert von 2 ist, sinken die Umsätze drastisch (Vergleichsbeispiel P8). Dies ist für den Fachmann überraschend. Wird komplett auf den Polymerisationsregler verzichtet, so werden zwar hohe Molmassen erreicht, jedoch verschlechtert sich die Polydispersität (Vergleichsbeispiele P5 und P6). Die Verwendung eines normalen monofunktionellen Aza-Initiators ergibt deutlich geringe Molmassen (Vergleichsbeispiel P9).

Herstellung der Haftklebemassen B1 bis B4

Die Basispolymere P1 und P3 sowie die Vergleichspolymere P6 und P9 werden, sofern sie nicht bereits in Lösung sind, in Aceton gelöst und mit 30 Gew.-% Harz Dertophene® T105 abgemischt. Diese harzmodifizierten Acrylat-Haftklebemassen B1 bis B4 wurden anschließend jeweils mit 0,2 Gew.-% Aluminiumacetylacetonat bezogen auf das Polymer abgemischt, auf einen Feststoffgehalt von 30 % (Messmethode A3) mit Aceton verdünnt und dann aus Lösung auf eine 23 μm dicke geätzte PET-Folie beschichtet. (Beschichtungsgeschwindigkeit 2,5 m/min, Trockenkanal 15 m, Temperaturen Zone 1: 40 °C, Zone 2: 70 °C, Zone 3: 95 °C, Zone 4: 105 °C) Der Masseauftrag betrug 100 $g/m^2$.

Die klebtechnischen Daten der Beispiele B1 bis B4 sind in Tabelle 2 zusammengefasst. Mit den erfindungsgemäßen Beispielen wird gezeigt, dass sehr leistungsfähige Klebebänder hergestellt werden können, die sich unter anderem durch gute Klebkräfte auf polaren und unpolaren Substraten (Stahl und Polyethlyen) und gute kohäsive Eigenschaften auch unter Temperatureinfluss auszeichnen.

Tabelle 2: Klebtechnische Ergebnisse

| **Beispiel** [ ] | **Polymer** [ ] | **Anteil Harz** | **Trägerfolie** [ ] | **Masse-auftrag** [g/m²] | **Klebkraft Stahl** [N/cm] | **Klebkraft PE** [N/cm] | **Scherstandzeit** 10N, 23°C [min] | **Scherstandzeit** 10N, 70°C [min] | **MSW 40°C / elast. Anteil** [µm] / [%] |
|---|---|---|---|---|---|---|---|---|---|
| B1 | P1 | 70 Teile Polymer P1 + 30 Teile Harz DT 105 | 23µm PET-Folie | 100 | 6,5 | 4,2 | > 10.000 | 680 | 160 / 79 |
| B2 | P3 | 70 Teile Polymer P3 + 30 Teile Harz DT 105 | 23µm PET-Folie | 100 | 6,5 | 4,2 | > 10.000 | 630 | 170 / 78 |
| B3 | P6 | 70 Teile Polymer P6 + 30 Teile Harz DT 105 | 23µm PET-Folie' | 100 | 4,2 | 0,8 | > 10.000 | 1.680 | 98 / 87 |
| B4 | P9 | 70 Teile Polymer P9 + 30 Teile Harz DT 105 | 23µm PET-Folie | 100 | 9,8 | 5,8 | 1.600 | 2 | 240 / 77 |

Klebkraft Stahl / PE = Messmethode H1
Scherstandzeit = Messmethode H2
MSW = Mikroscherweg = Messmethode H3
DT 105 = Dertophene® T105

## Patentansprüche

1. Verfahren zur Herstellung von Haftklebemassen,
bei dem eine kontrollierte radikalische Polymerisationsreaktion einer Reaktionsvorlage umfassend eines oder mehrere Monomere in Anwesenheit zumindest eines radikalischen Initiators zur Herstellung zumindest eines Polymers durchgeführt wird,
**dadurch gekennzeichnet, dass**
als radikalischer Initiator zumindest ein cyclisches 1,4-Diradikal eingesetzt wird, das mittels einer Cyclisierungsreaktion aus einer Verbindung erzeugt wird, die zumindest zwei ungesättigte C-C-Bindungen aufweist ("diradikalbildender Initiator"),
wobei die Polymerisationsreaktion in Anwesenheit zumindest einer Reglersubstanz ("Polymerisationsregler") durchgeführt wird,
wobei das Verhältnis V der Stoffmenge $n_i$ des diradikalbildenden Initiators (bzw. der diradikalbildenden Initiatoren, wenn mehrere diradikalbildende Initiatoren eingesetzt werden) zur Stoffmenge $n_R$ des Polymerisationsreglers (bzw. der Polymerisationsregler, wenn mehrere Polymerisationsregler eingesetzt werden) im Bereich von $2 \leq V \leq 64$ liegt.

2. Verfahren nach Anspruch 1, **dadurch gekennzeichnet, dass**
die Verbindungen, aus denen die cyclischen 1,4-Diradikale erzeugt werden (diradikalbildende Initiatoren), gewählt sind aus der Gruppe umfassend Endiine, Eninallene, Endiallene, Eninkumulene, Enallenkumulene, cyclische Diine.

3. Verfahren nach Anspruch 2, **dadurch gekennzeichnet, dass**
die Verbindungen zur Erzeugung der Diradikale (diradikalbildende Initiatoren) gewählt werden aus der Liste umfassend die folgenden Verbindungen

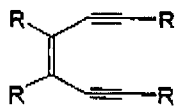
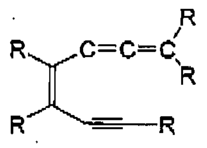
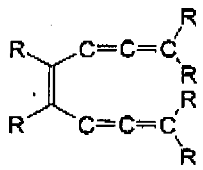

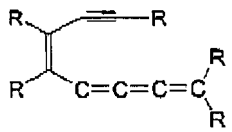
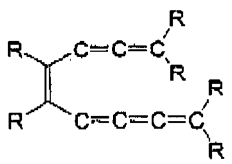
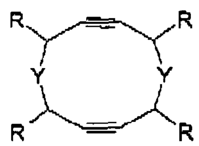

worin die Reste R jeweils unabhängig voneinander gewählt sind, insbesondere aus der Gruppe umfassend Wasserstoff, Alkylreste, Alkoxyreste, Thioalkylreste, Sulfoalkoxyreste, Carboalkoxyreste, Carboamidalkylreste, und worin die Y unabhängig voneinander gewählt sind aus der Gruppe umfassend Sauerstoff, Schwefel, Stickstoff, Alkylamin, schwefelhaltige Gruppen, phosphorhaltige Gruppen.

4. Verfahren nach einem der vorangehenden Ansprüche, **dadurch gekennzeichnet, dass**
als Reglersubstanz zumindest eine Verbindung mit zumindest einer funktionellen Gruppe S-C=X eingesetzt wird, wobei X = S, O oder N.

5. Verfahren nach Anspruch 4, **dadurch gekennzeichnet, dass**
die Reglersubstanz aus der Gruppe umfassend Dithioester, Dithiocarbonate, Dithiocarbamate, Trithiocarbonate, Imido-Dithio-Carbonate und Xanthate ("RAFT-Regler") gewählt ist.

6. Verfahren nach einem der vorangehenden Ansprüche, **dadurch gekennzeichnet, dass** die Reaktionsvorlage zumindest ein Monomer auf Acrylatbasis umfasst, insbesondere Acrylsäure, Methacrylsäure, einen oder mehrere Acrylsäureester und/oder einen oder mehrere Methacrylsäureester.

7. Verfahren nach einem der vorangehenden Ansprüche, **dadurch gekennzeichnet dass**
das Verhältnis V der Stoffmenge $n_i$ des diradikalbildenden Initiators (bzw. der diradikalbildenden Initiatoren, wenn

mehrere diradikalbildende Initiatoren eingesetzt werden) zur Stoffmenge $n_R$ des Polymerisationsreglers (bzw. der Polymerisationsregler, wenn mehrere Polymerisationsregler eingesetzt werden) im Bereich von $3 \leq V \leq 32$, sehr bevorzugt $4 \leq V \leq 16$ liegt.

**8.** Verfahren nach einem der vorangehenden Ansprüche, **dadurch gekennzeichnet, dass** die erhaltenen Polymere auf Acrylatbasis als Klebemassen verwendet werden oder zu Klebemassen weiterverarbeitet werden.

**9.** Verfahren nach Anspruch 8, **dadurch gekennzeichnet, dass** die Klebmassen Haftklebemassen sind.

**10.** Haftklebemasse umfassend eine Basispolymerkomponente umfassend ihrerseits zumindest ein Polymer mit einer gewichtsmittleren Molmasse von $M_w \geq 450.000$ g/mol, einer Polydispersität von $PD \leq 5$, **dadurch gekennzeichnet, dass** das betreffende Polymer im Polymerrückgrat ein cyclisches Strukturelement beinhaltet.

**11.** Haftklebemasse nach Anspruch 10, **dadurch gekennzeichnet, dass** das cyclische Strukturelement ein Element ist aus der Gruppe umfassend

- Fünfringe,
- aromatische Sechsringe,
- kondensierte aromatische Systeme,
- heterosubstituierte Bicyclo-[4.4.0]-Decdiene mit einem konjugierten $\pi$-System das sich über die Brückenbindung erstreckt, insbesondere 4,9-heterosubstituiertes Bicyclo-[4.4.0]-Dec-1,6-diene.

**12.** Haftklebemassen nach Anspruch 10 oder 11, **dadurch gekennzeichnet dass** das zumindest eine Polymere enthaltend cyclische Strukturelemente in den Polymerketten weiterhin zumindest eine Gruppe S-C=X aufweist, mit X = S, O und/oder N.

**13.** Haftklebemasse nach einem der Ansprüche 10 bis 12, erhältlich nach einem der Ansprüche 1 bis 9.

## Claims

**1.** Process for preparing pressure-sensitive adhesives by carrying out a controlled radical polymerization reaction of an initial reaction charge comprising one or more monomers in the presence of at least one radical initiator for preparing at least one polymer, **characterized in that** use is made as radical initiator of at least one cyclic 1,4-diradical which is generated by means of a cyclization reaction from a compound which has at least two unsaturated C-C bonds ("diradical-forming initiator"), the polymerization reaction being carried out in the presence of at least one chain transfer agent ("polymerization regulator"), the ratio V of the amount-of-substance $n_I$ of the diradical-forming initiator (or of the diradical-forming initiators, if a plurality of diradical-forming initiators are used) to the amount-of-substance $n_R$ of the chain transfer agent (or of the chain transfer agents, if a plurality of chain transfer agents are used) being in the range of $2 \leq V \leq 64$.

**2.** Process according to Claim 1, **characterized in that** the compounds from which the cyclic 1,4-diradicals are generated (diradical-forming initiators) are selected from the group encompassing endiynes, eneyneallenes, enediallenes, eneynecumulenes, eneallenecumulenes and cyclic diynes.

**3.** Process according to Claim 2, **characterized in that** the compounds for generating the diradicals (diradical-forming initiators) are selected from the list encompassing the following compounds

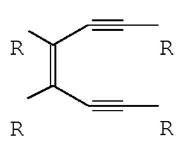 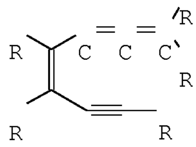 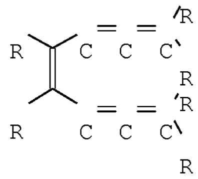

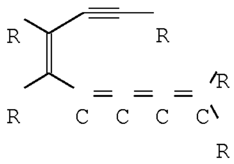 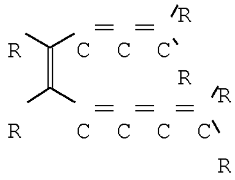 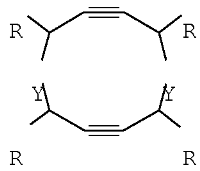

in which the radicals R are selected in each case independently of one another, more particularly from the group encompassing hydrogen, alkyl radicals, alkoxy radicals, thioalkyl radicals, sulphoalkoxy radicals, carboalkoxy radicals, carboamidoalkyl radicals, and in which the Ys are selected independently of one another from the group encompassing oxygen, sulphur, nitrogen, alkylamine, sulphur-containing groups, phosphorus-containing groups.

**4.** Process according to any of the preceding claims, **characterized in that** use is made as chain transfer agent of at least one compound having at least one functional group S-C=X, where X = S, 0 or N.

**5.** Process according to Claim 4, **characterized in that** the chain transfer agent is selected from the group encompassing dithioesters, dithiocarbonates, dithiocarbamates, trithiocarbonates, imidodithiocarbonates and xanthates ("RAFT chain transfer agents").

**6.** Process according to any of the preceding claims, **characterized in that** the initial reaction charge comprises at least one acrylate-based monomer, more particularly acrylic acid, methacrylic acid, one or more acrylic esters and/or one or more methacrylic esters.

**7.** Process according to any of the preceding claims, **characterized in that** the ratio V of the amount-of-substance $n_I$ of the diradical-forming initiator (or of the diradical-forming initiators, if a plurality of diradical-forming initiators are used) to the amount-of-substance $n_R$ of the chain transfer agent (or of the chain transfer agents, if a plurality of chain transfer agents are used) is in the range of $3 \leq V \leq 32$, very preferably $4 \leq v \leq 16$.

**8.** Process according to any of the preceding claims, **characterized in that** the acrylate-based polymers obtained are used as adhesives or are further-processed to adhesives.

**9.** Process according to Claim 8, **characterized in that** the adhesives are pressure-sensitive adhesives.

**10.** Pressure-sensitive adhesive comprising a base polymer component comprising in turn at least one polymer having a weight-average molar mass of $Mw \geq 450\,000$ g/mol, a polydispersity of $PD \leq 5$, **characterized in that** the polymer in question includes a cyclic structural element in the polymer backbone.

**11.** Pressure-sensitive adhesive according to Claim 10, **characterized in that** the cyclic structural element is an element from the group encompassing

- five-membered rings,
- aromatic six-membered rings,
- fused aromatic systems,
- heterosubstituted bicyclo[4.4.0]decadienes with a conjugated n-system which extends over the bridging bond, more particularly 4,9-heterosubstituted bicyclo[4.4.0]deca-1,6-diene.

**12.** Pressure-sensitive adhesives according to Claim 10 or 11, **characterized in that** the at least one polymer comprising cyclic structural elements in the polymer chains also has at least one group S-C=X, where X = S, 0 and/or N.

**13.** Pressure-sensitive adhesive according to any of Claims 10 to 12, obtainable according to any of Claims 1 to 9.

**Revendications**

**1.** Procédé pour la préparation de masses autoadhésives, dans lequel on réalise une réaction de polymérisation contrôlée par voie radicalaire d'une charge réactionnelle comprenant un ou plusieurs monomères en présence d'au moins un initiateur radicalaire pour la préparation d'au moins un polymère, **caractérisé en ce qu'**on utilise, comme initiateur radicalaire, au moins un 1,4-diradical cyclique, qui est généré au moyen d'une réaction de cyclisation à partir d'un composé, qui présente au moins deux liaisons C-C insaturées ("initiateur formant des diradicaux"), la réaction de polymérisation étant réalisée en présence d'au moins une substance de régulation ("régulateur de polymérisation"), le rapport V de la quantité de substance $n_I$ de l'initiateur formant des diradicaux (ou des initiateurs formant des diradicaux lorsque plusieurs initiateurs formant des diradicaux sont utilisés) à la quantité de substance $n_R$ du régulateur de polymérisation (ou des régulateurs de polymérisation lorsque plusieurs régulateurs de polymérisation sont utilisés) se situant dans la plage de $2 \leq V \leq 64$.

**2.** Procédé selon la revendication 1, **caractérisé en ce que** les composés, à partir desquels les 1,4-diradicaux cycliques sont générés (initiateurs formant des diradicaux), sont choisis dans le groupe comprenant les ène-diynes, les ène-yne-allènes, les ène-diallènes, les ène-yne-cumulènes, les ène-allène-cumulènes, les diynes cycliques.

**3.** Procédé selon la revendication 2, **caractérisé en ce que** les composés pour générer les diradicaux (initiateurs formant des diradicaux) sont choisis dans la liste comprenant les composés suivants

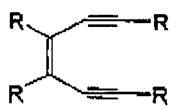
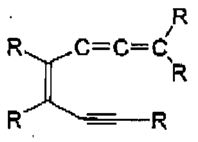
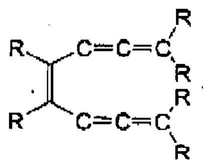

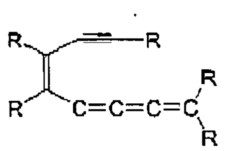
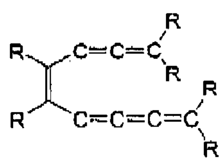
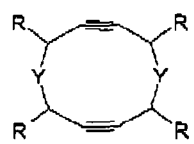

dans lesquels les radicaux R sont choisis, à chaque fois indépendamment les uns des autres, en particulier dans le groupe comprenant l'hydrogène, les radicaux alkyle, les radicaux alcoxy, les radicaux thioalkyle, les radicaux sulfoalcoxy, les radicaux carboalcoxy, les radicaux carboamidoalkyle, et dans lesquels les radicaux Y sont choisis, indépendamment les uns des autres, dans le groupe comprenant l'oxygène, le soufre, l'azote, les alkylamines, les groupes contenant du soufre, les groupes contenant du phosphore.

**4.** Procédé selon l'une quelconque des revendications précédentes, **caractérisé en ce qu'**on utilise, comme substance de régulation, au moins un composé présentant au moins un groupe fonctionnel S-C=X, où X = S, 0 ou N.

**5.** Procédé selon la revendication 4, **caractérisé en ce que** la substance de régulation est choisie dans le groupe comprenant les dithioesters, les dithiocarbonates, les dithiocarbamates, les trithiocarbonates, les imido-dithiocarbonates et les xanthates (régulateurs "RAFT").

**6.** Procédé selon l'une quelconque des revendications précédentes, **caractérisé en ce que** la charge réactionnelle comprend au moins un monomère à base d'acrylate, en particulier de l'acide acrylique, de l'acide méthacrylique, un ou plusieurs esters de l'acide acrylique et/ou un ou plusieurs esters de l'acide méthacrylique.

**7.** Procédé selon l'une quelconque des revendications précédentes, **caractérisé en ce que** le rapport V de la quantité de matière $n_I$ de l'initiateur formant des diradicaux (ou des initiateurs formant des diradicaux lorsque plusieurs initiateurs formant des diradicaux sont utilisés) à la quantité de matière $n_R$ du régulateur de polymérisation (ou des régulateurs de polymérisation lorsque plusieurs régulateurs de polymérisation sont utilisés) se situe dans la plage de $3 \leq V \leq 32$, très préférablement dans la plage de $4 \leq V \leq 16$.

**8.** Procédé selon l'une quelconque des revendications précédentes, **caractérisé en ce que** les polymères obtenus à base d'acrylate sont utilisés comme masses adhésives ou sont transformés ultérieurement en masses adhésives.

**9.** Procédé selon la revendication 8, **caractérisé en ce que** les masses adhésives sont des masses autoadhésives.

**10.** Masse autoadhésive comprenant un composant polymère de base comprenant à son tour au moins un polymère présentant une masse molaire pondérale moyenne de $M_w \geq 450\,000$ g/mole, une polydispersité de $PD \leq 5$, **caractérisée en ce que** le polymère concerné comporte, dans la chaîne principale du polymère, un élément structural cyclique.

**11.** Masse autoadhésive selon la revendication 10, **caractérisée en ce que** l'élément structural cyclique est un élément du groupe comprenant

- les cycles à cinq chaînons,
- les cycles aromatiques à six chaînons,
- les systèmes aromatiques condensés,
- les bicyclo-[4,4,0]-décadiènes hétérosubstitués présentant un système $\pi$ conjugué, qui s'étend sur la liaison formant un pont, en particulier le bicyclo-[4,4,0]-déca-1,6-diène 4,9-hétérosubstitué.

**12.** Masses autoadhésives selon la revendication 10 ou 11, **caractérisées en ce qu'**au moins un polymère contenant des éléments structuraux cycliques dans les chaînes polymères présente au moins un groupe S-C=X, où X = S, 0 et/ou N.

**13.** Masse autoadhésive selon l'une quelconque des revendications 10 - 12, pouvant être obtenue selon l'une quelconque des revendications 1 à 9.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 5100980 A
- US 5347055 A
- US 4675426 A
- US 5618900 A
- US 5945491 A
- US 5854364 A
- US 5789487 A
- US 6765078 B2
- US 6720399 B2
- WO 2006027387 A1
- EP 1978069 A1


### In der Beschreibung aufgeführte Nicht-Patentliteratur


- **D.B. PRIDDY et al.** *Adv Polym. Sci.,* 1994, vol. 111, 67
- **BORSIG et al.** *Collect Czech. Chem. Commun.,* 1973, vol. 38, 1343
- *Polym. Bull.,* 1991, vol. 25, 537
- **VON HALL.** *Macromolecules,* 1991, vol. 24, 2485
- **D.B. PRIDDY.** *Adv. Pol. Sci.,* vol. 111, 67
- *Macromol. Theory Simul.,* 2002, vol. 11, 823
- *Angew. Chem., Int. Ed.,* 2004, vol. 43, 1691
- *J. Am. Chem. Soc.,* 2003, vol. 125, 12992
- Römpp Online. Georg Thieme Verlag, Dezember 2009
- **VON DONATAS SATAS.** Handbook of Pressure Sensitive Adhesive Technology. van Nostrand, 1989
- **T.G. FOX.** *Bull. Am. Phys. Soc.,* 1956, vol. 1, 123
- **VON NICOLAOU et al.** *Angew. Chem.,* 1991, vol. 103, 1453
- **VON MOORE et al.** *Macromolecules,* 2005, vol. 38, 7266
- **VON TURRO et al.** *J. Am. Chem. Soc,* 1998, vol. 120, 1835
- *Polymer,* 1967, vol. 8, 381 ff
- *J. Org. Chem,* 1994, vol. 59, 5038